# EUROPEAN PATENT APPLICATION

(11) **EP 2 468 564 A2**
(43) Date of publication of application: **27.06.2012**
(21) Application number: 11194797.4
(22) Date of filing: 21.12.2011
(51) Int. Cl.: B60L 11/18

(54) **CHARGING CONTROL SYSTEM**

(30) Priority: 24.12.2010 JP 2010286907; 10.06.2011 JP 2011129771
(71) Applicant: Hitachi Automotive Systems, Ltd., Hitachinaka-shi Ibaraki 312-8503 (JP)
(72) Inventor: KOBAYASHI, Yuichi, Tokyo, 100-8220 (JP); SHIRAI, Keisuke, Tokyo, 100-8220 (JP); KASHIYAMA, Masamori, Tokyo, 100-8220 (JP); MORII, Shimon, Tokyo, 100-8220 (JP)
(74) Representative: MERH-IP Matias Erny Reichl Hoffmann

(57) **Abstract**

In a charging control system, electrically-driven vehicles (30) whose charging levels are lower than such a charging level required to drive these electrically-driven vehicles (30) over a necessary minimum drivable distance (1215) are charged with a priority, and such an electrically-driven vehicle (30 A1) whose charging level quickly reaches the above-explained charging level among these electrically-driven vehicles (30) is charged with a top priority. Also, in the charging control system, an order for dynamically charging vehicle-purpose batteries is rearranged by monitoring a change in charging environments, for instance, an electrically-driven vehicle is newly coupled to a charger (29) in a half way; a commonly available electric power amount is increased by solar power generation etc.; and a supplyable electric power amount (W) is lowered due to utilization of electricity by a subject other than electrically-driven vehicles.

## Description

### BACKGROUND

The subject matter discussed herein relates to a charging control system for charging vehicle-purpose batteries which are mounted on electrically-driven vehicles by employing chargers.

In electrically-driven vehicles such as electric cars and motor-driven bicycles, although vehicle-purpose batteries which are mounted thereon are required to be charged in order to drive the electrically-driven vehicles, battery capacities of the vehicle-purpose batteries are large and times required until full charging conditions are long, as compared with those of general-purpose domestic electric products. In particular, in case that a plurality of electrically-driven vehicles are simultaneously charged in general charging-purpose facilities (will be simply referred to as "facilities" hereinafter), there is a problem that electric power consumption amounts for charging the electrically-driven vehicles exceed amounts of electric power which can be supplied from electric power companies to the facilities.

With respect to the above-described problem, JP-A-08-116626 (paragraph 0008) discloses such a technique that a charging system is controlled in such a manner that a sum of electric power consumption amounts becomes smaller than, or equal to a supplyable electric power amount by shifting charge starting timing of respective electrically-driven vehicles. Also, Japanese Patent No. 3901100 (JP-A-2004-229355) (paragraph 0011) discloses another technique in that an automatic charging system is controlled in order not to exceed a supplyable electric power amount not by the timing, but by reducing charging electric power of respective electrically-driven vehicles.

### SUMMARY

Generally speaking, cost of electricity corresponding to a power source of an electrically-driven vehicle is lower than that of gasoline corresponding to a power source of a gasoline engine car. As a result, reduction effects of vehicle operation costs as to taxi enterprises and rent-a-car enterprises, by which electrically-driven vehicles are frequently used, are larger than those of general consumers. In particular, since drive distances when electrically-driven vehicles are driven in a so-called "car sharing system" are relatively short, it is understandable that the car sharing system and the electrically-driven vehicles are good compatible. Since these enterprises have an awareness of their duty for increasing net working rates of the electrically-driven vehicles, the below-mentioned needs are made: That is, even one electrically-driven vehicle can be quickly brought into a usable condition within business hours.

However, although the conventional techniques can realize higher efficient charging in entire systems under limitations for the supplies of electric power, the conventional techniques do not consider that respective charging times are shortened.

For instance, in the conventional technique disclosed in JP-A-08-116626, although an order and timing of charging are controlled by considering a remaining capacity and a time required for a fully charged capacity of a vehicle-purpose battery as to each of electrically-driven vehicles, a next charging operation is not commenced until an electric power consumption amount for first charging operation is lowered. As a result, there are large possibilities that a large number of electrically-driven vehicles may occur in which vehicle-purpose batteries thereof cannot be charged up to such a required charging condition that the electrically-driven vehicles are driven over available distances.

Also, in the conventional technique disclosed in Japanese Patent No. 3901100, all electrically-driven vehicles are equally charged at the same time. As a result, electric power for charging respective electrically-driven vehicles is decreased, so that charging times required for the respective electrically-driven vehicles are prolonged.

Furthermore, while the conventional technique assumes that a so-called "nighttime electric power" is utilized, a charging time range, a supplyable electric power amount, and a total number of electrically-driven vehicles which should be charged have been previously determined. As a result, this conventional technique does not consider dynamic changes in supplyable electric power amounts caused by that, for example, a supplyable electric power amount produced by solar power generations is increased and/or decreased.

Due to the above-described reasons, there is a problem that a sufficient number of electrically-driven vehicles which can be used when needs are made cannot be always prepared.

The specification discloses a charging control method, an apparatus, or a system for realizing this charging control method which can quickly prepare as many usable electrically-driven vehicles as possible, by managing charging timing by considering charging conditions of electrically-driven vehicles, so that a net working rate of the electrically-driven vehicles can be increased.

One of more concrete aspects is a charging control system for controlling charging of a plurality of vehicle-purpose batteries equipped in a plurality of electrically-driven vehicles, which is featured by that the charging control system is comprised of: one or more charging-purpose facilities; and a charging control apparatus for monitoring and controlling charging situations in the charging-purpose facilities;
the charging-purpose facility is comprised of: one, or more chargers for charging the vehicle-purpose batteries provided in the electrically-driven vehicles; a power receiving apparatus for outputting electric power inputted from a power distribution network to the chargers; and an electric power monitoring apparatus for monitoring a supplyable electric power amount from the power receiving apparatus to the chargers, and electric power consumption amounts in the chargers; and/or
the charging control apparatus is comprised of: an electric power situation monitoring unit for acquiring condition information of each of the vehicle-purpose batteries from each of the electrically-driven vehicles, and for either acquiring or predicting the power electric consumption amounts in the chargers from the electric power monitoring apparatus; a charging start/stop judging unit for calculating a charging time until the present charging level reaches a previously set charging level for each of the electrically-driven vehicles, for reserving a charging start instruction and/or a charging stop instruction of each of the electrically-driven vehicles based upon the calculated charging time, the electric power consumption amount predicted by the electric power situation monitoring unit and the supplyable electric power amount monitored by the electric power monitoring apparatus; and a charging control instructing unit for transmitting the reserved charging start instruction and/or the reserved charging stop instruction to the electrically-driven vehicle which constitutes a subject vehicle.

Also, the charging start/stop judging unit may be configured to execute a judging process of the electrically-driven vehicle in which the charging start/stop judging unit reserves the charging start instruction to the electrically-driven vehicle whose vehicle-purpose battery is not under charging and whose remaining battery capacity is lower than the charging level, and stops charging in case that a predicted electric power consumption amount when charging to the electrically-driven vehicle is started exceeds a supplyable electric power amount to the charger in the facility. Moreover, the charging start/stop judging unit may be alternatively configured to determine issuing of the charging stop instruction of the vehicle-purpose battery of the electrically-driven vehicle under charging, or canceling the reservation of the electrically-driven vehicle, the charging start instruction of which has been reserved based upon the battery condition information and the supplyable electric power amount.

Also, the charging start/stop judging unit may be configured in that as to the electrically-driven vehicles in which the vehicle-purpose batteries thereof are under charging, or charging of the vehicle-purpose batteries is being reserved, and furthermore, the remaining battery capacities thereof are higher than, or equal to the charging level, in case that the predicted electric power consumption amounts exceed the supplyable electric power to the chargers within the facility in the order of longer charging times up to full charging, the charging start/stop judging unit reserves the charging stop instruction as to the electrically-driven vehicles.

Also, the charging start/stop judging unit may be configured to determine such an electrically-driven vehicle which should be charged in such a manner that the electrically-driven vehicle whose charging time up to the charging level is short is charged with a top priority within a range where electric power amounts required to charge the vehicle-purpose batteries of the electrically-driven vehicles do not exceed the supplyable electric power amount to the facility.

Also, the charging start/stop judging unit may be configured in that since the charging start/stop judging unit sets plural pieces of the charging levels, the charging start instruction and/or the charging stop instruction of each of the electrically-driven vehicles is reserved in response to the plurality of charging levels.

Also, the charging start/stop judging unit may be configured in that when an electric power amount required to charge the electrically-driven vehicles coupled to the chargers exceeds the supplyable electric power amount of the facility, the charging start/stop judging unit requests the power distribution network to increase the supplyable electric power amount.

Also, the charging control apparatus may be configured to be provided with charging condition information which includes items as to a charger ID, a charging condition, a remaining capacity of the vehicle-purpose battery, an electric power consumption amount, a charging time, and a drivable distance; and the electric power situation monitoring unit may be configured to output the charging condition information via an output apparatus which can be confirmed by a user.

Also, the charging control apparatus may be configured to be provided with setting information which includes any one, or more items of an update interval, a charging level, a supply of electric power from a power distribution network, a supply of electric power from an equipment within a facility, a supply of electric power from an electrically-driven vehicle, and a charging plan setting method; and the electric power situation monitoring unit may be configured to set the setting information which is inputted by a user via an input apparatus to the charging control apparatus.

Also, the electric power situation monitoring unit may be configured by that in case that an electrically-driven vehicle which satisfies a reservation condition cannot be prepared, the electric power situation monitoring unit notifies the situation to a user.

Also, the charging start/stop judging unit may be configured to rearrange an order for charging the vehicles-purpose batteries of the respective electrically-driven vehicles by considering vehicle reservation information of users.

Also, the facility may be configured to be comprised of a facility-purpose battery which stores thereinto electric power as chemical energy and outputs the stored electric power to the chargers, and/or a solar cell which converts optical energy into electric power by utilizing an opto-electromotive effect and outputs the converted electric power to the chargers; and the electric power monitoring apparatus may be configured to monitor supplyable electric power amounts from the power receiving apparatus and the facility-purpose battery, and/or the solar cell.

Also, the charging control system may be configured to further comprise plural sets of the facilities.

With reference to the disclosed contents, a plurality of usable electrically-driven vehicles can be quickly prepared as many as possible, so that an operating ratio of the electrically-driven vehicles can be increased.

These and other benefits are described throughout the present specification. A further understanding of the nature and advantages of the invention may be realized by reference to the remaining portions of the specification and the attached drawings.

### BRIEF DESCRIPTION OF THE DRAWINGS

Fig. 1 is a diagram for exemplifying an arrangement of a charging control system according to a first embodiment.
Fig. 2 is a diagram for showing an example of vehicle-purpose battery condition information in the first embodiment.
Fig. 3 is a flow chart for exemplifying a process of an electric power situation monitoring unit in the first embodiment.
Fig. 4 is a flow chart for exemplifying a reservation process of a charging start of a charging start/stop judging unit in the first embodiment.
Fig. 5 is a flow chart for exemplifying a reservation process of a charging stop of the charging start/stop judging unit in the first embodiment.
Fig. 6A to Fig. 6C are diagrams for showing an example of vehicle-purpose battery condition information in a second embodiment.
Fig. 7 is an example of a screen on which the vehicle-purpose battery condition information is displayed.
Fig. 8 is a diagram for indicating an example of electric power consumption amounts used in charging with respect to remaining capacities of the vehicle-purpose battery.
Fig. 9 is an example of a screen on which an initial value is set by an operator as a preparation stage.
Fig. 10 is a flow chart for exemplifying a process of an electric power situation monitoring unit in a second embodiment.
Fig. 11 is a flow chart for exemplifying a process of a charging start/stop judging unit in the second embodiment.
Fig. 12 is an example of a screen utilized when a person who uses a vehicle reserves the vehicle.
Fig. 13 is a diagram for representing an example of vehicle reservation information of the person who uses the vehicle.
Fig. 14 is an example of a screen on which a transition of battery conditions and a charging plan of each of the vehicle-purpose batteries is displayed.

### DETAILED DESCRIPTION OF THE EMBODIMENTS

### <FIRST EMBODIMENT>

Referring now to drawings, a description is made of a first embodiment. In the first embodiment, a charging control apparatus acquires condition information of vehicle-purpose batteries mounted on electrically-driven vehicles from the electrically-driven vehicles, acquires a supplyable electric power amount from an electric power monitoring apparatus of a facility, judges timing at which charging of the vehicle-purpose battery of each of the electrically-driven vehicles is started and timing at which charging of the vehicle-purpose battery thereof is stopped based upon the vehicle-purpose battery condition and the supplyable electric power amount, and then, transmits a charge starting instruction and a charge stopping instruction to the electrically-driven vehicle.

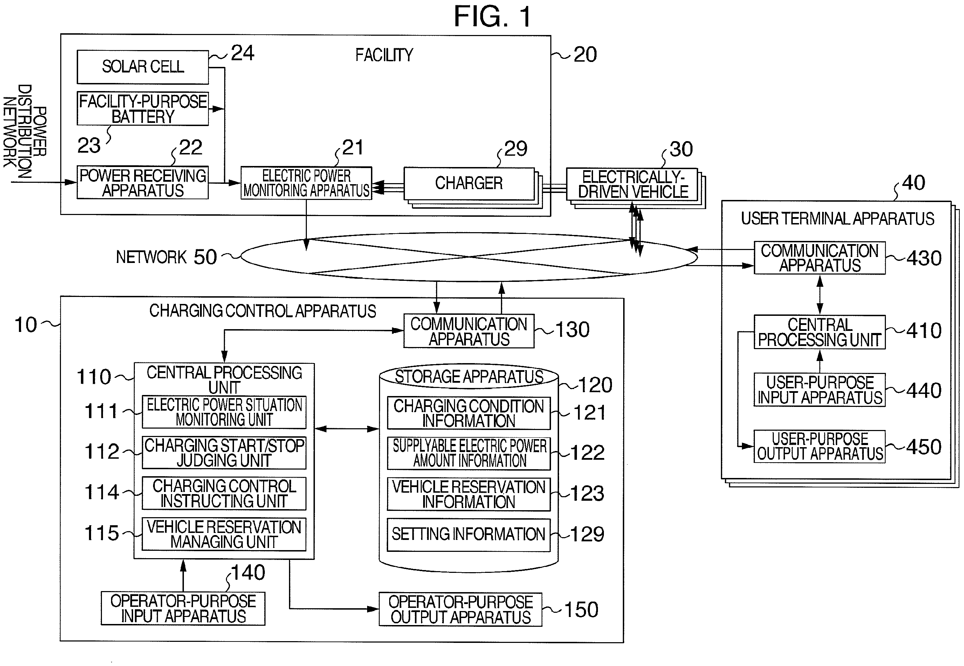

Fig. 1 is a diagram for exemplifying an arrangement of a charging control system, according to the first embodiment, which contains a charging control apparatus 10 and one, or more sets of facilities 20. As illustrated in the drawing, the charging control apparatus 10 is coupled via a network 50 to an electric power monitoring apparatus 21, one, or more pieces of electrically-driven vehicles 30, and a user terminal apparatus 40 so as to be communicated with each other. The electric power monitoring apparatus 21 manages a supplyable electric power amount and electric power consumption amounts used for charging within the facility 20. The electrically-driven vehicle 30 can manage vehicle-purpose battery conditions of the own electrically-driven vehicle 30, and can control starting and stopping of charging upon receipt of an instruction. The user terminal apparatus 40 inputs vehicle reservation information directed to a user of the electrically-driven vehicle 30, and outputs a vehicle-purpose battery condition to the user.

The information of the vehicle-purpose battery conditions managed by the electrically-driven vehicle 30 contains information for indicating whether or not the electrically-driven vehicle 30 has been coupled to a charger 29 of the facility 20, information for indicating whether or not the vehicle-purpose battery is under charging operation when the electrically-driven vehicle 30 has been coupled to the charger 29, and information as to a remaining capacity of the vehicle-purpose battery, an electric power consumption amount for charging thereof, a remaining time up to a fully charged condition, and the like. In a single facility 20, a plurality of electrically-driven vehicles 30 can be charged.

The vehicle reservation information which is accepted by the user terminal apparatus 40 from the user contains information about a desirable use starting day/time of an electrically-driven vehicle 30, charging levels capable of satisfying requirements of the user, for instance, the user wants to drive the electrically-driven vehicle 30 in the suburbs of a town, or in the far distance.

As will be explained later, the facility 20 indicates a group of apparatuses which are constructed by containing a set of a power receiving apparatus, a power generating apparatus, a facility-purpose battery, a plurality of chargers, and an electric power monitoring apparatus. The facility 20 is installed in an enterprise office holding a plurality of electrically-driven vehicles 30 such as, for example, a taxi office, a rent-a-car office, and a car dealer.

The electrically-driven vehicle 30 is such an electrically-driven vehicle as, for instance, an electric car and an electrically-driven bicycle, which is driven by employing electric power of a charged vehicle-purpose battery.

The user terminal apparatus 40 has a communication apparatus 430, a user-purpose input apparatus 440, a user-purpose output apparatus 450, and a central processing unit (CPU) 410. The communication apparatus 430 is employed so as to be coupled to the network 50. The user-purpose input apparatus 440 accepts a vehicle reservation from a user. The user-purpose output apparatus 450 outputs charging conditions and reservation situations of respective electrically-driven vehicles 30 to the user. The central processing unit 410 is coupled to the communication apparatus 430, the user-purpose input apparatus 440, and the user-purpose output apparatus 450, and communicates with the charging control apparatus 10 so as to realize inputs and outputs of information. The user terminal apparatus 40 may be installed as, for example, a newsstand terminal so called "kiosk" terminal in the facility 20, or may be alternatively possessed which is like a PC (personal computer), or a portable telephone by the user.

The network 50 may be a dedicated-line network, or may be alternatively a portable telephone network, or the Internet.

The charging control apparatus 10 has a communication apparatus 130, a storage apparatus 120 such as a hard disk drive, a central processing unit (CPU) 110, an operator-purpose input apparatus 140, and an operator-purpose output apparatus 150. The communication apparatus 130 is employed so as to be coupled to the network 50. The storage apparatus 120 is provided in order to store therein vehicle-purpose battery charging condition information 121, supplyable electric power amount information 122, vehicle reservation information 123, setting information 129, and the like. The central processing unit 110 is coupled to the communication apparatus 130 and the storage apparatus 120 so as to realize charging controls of the respective electrically-driven vehicles 30. In the operator-purpose input apparatus 140, an operator (namely, person who manages and operates the charging control system) inputs initial values which are required to realize charging controls of the respective electrically-driven vehicles 30. The operator-purpose output apparatus 150 outputs the charging conditions of the respective electrically-driven vehicles 30 to the operator.

The central processing unit 110 executes one, or a plurality of programs stored in the storage apparatus 120 to realize functions which are provided by an electric power situation monitoring unit 111, a charging start/stop judging unit 112, a charging control instructing unit 114, and a vehicle reservation managing unit 115, since the central processing unit 110. The electric power situation monitoring unit 111 acquires information as to a supplyable electric power amount and electric power amounts used in charging within the facility 20 from the electric power monitoring apparatus 21 in a repetition manner, for example, a periodic manner, and acquires information as to vehicle-purpose battery conditions of electrically-driven vehicles 30 from these electrically-driven vehicles 30 in a repetition manner, for example, a periodic manner, and manages the acquired information. The charging start/stop judging unit 112 judges timing at which charging to a vehicle-purpose battery of each of the electrically-driven vehicles 30 is started and/or timing at which charging to the vehicle-purpose battery thereof is stopped by considering the supplyable electric power amount of the facility 20, and a vehicle-purpose battery condition of each of the respective electrically-driven vehicles 30. The charging control instructing unit 114 instructs a start of charging, or a stop of charging to the vehicle-purpose battery of each of the electrically-driven vehicles 30 based upon a judgement of the charging start/stop judging unit 112. The vehicle reservation managing unit 115 manages reservation situations of the respective electrically-driven vehicles 30.

These programs may be stored in the storage apparatus 120, or may be alternatively conducted from another apparatus to the storage apparatus 120 via a medium which may be utilized by the charging control apparatus 10, if necessary. The above-described medium designates, for example, either a storage medium which may be detachably mounted to the above-described charging control apparatus 10 or a communication medium (namely, wired, wireless, or optical network 50 coupled to communication apparatus 130, otherwise carrier waves and digital signals propagated to network 50).

The facility 20 is equipped with an electric power monitoring apparatus 21, a power receiving apparatus 22 such as a power distribution box, a facility-purpose battery 23, a solar cell 24, and a charger 29. The electric power monitoring apparatus 21 monitors electric power situations within the facility 20. The power receiving apparatus 22 receives electric power as an input from a power distribution network provided by an electric power company, and outputs the received electric power to the charger 29. The facility-purpose battery 23 may convert electric energy into chemical energy to be stored, and may derive the stored chemical energy as electric energy, if necessary. The solar cell 24 directly converts optical energy into electric power by utilizing an opto-electromotive force effect. The charger 29 charges the vehicle-purpose battery of the electrically-driven vehicle 30.

While the electric power monitoring apparatus 21 is coupled to the power receiving apparatus 22, the facility-purpose battery 23, the solar cell 24, and the charger 29, this electric power monitoring apparatus 21 monitors and grasps electric power amounts which can be supplied by the power receiving apparatus 22, the facility-purpose battery 23, and the solar cell 24, and an amount of electric power which is consumed by the charger 29 in charging. A plurality of the above-described chargers 29 have been coupled to a single set of the electric power monitoring apparatus 21. The charger 29 may be a charger which is exclusively configured for the electrically-driven vehicle 30, or may be alternatively a general-purpose charger.

The electric power monitoring apparatus 21 may further acquire situation information of the vehicle-purpose battery of the electrically-driven vehicle 30 via the charger 29 in a repetition manner, for example, a periodic manner. In addition, the electric power monitoring apparatus 21 may alternatively control a charging start, or a charging stop of the vehicle-purpose battery of the electrically-driven vehicle 30 by receiving an instruction of the charging control apparatus 10.

In the first embodiment, a description is made of the below-mentioned assumption: That is, the charging control apparatus 10 acquires situation information of a vehicle-purpose battery of an electrically-driven vehicle 30 without via the electric power monitoring apparatus 21 and the charger 29 from the electrically-driven vehicle 30 coupled to the network 50, and instructs a charging start and a charging stop of the vehicle-purpose battery with respect to the electrically-driven vehicle 30.

The charging control apparatus 10 may be contained as a partial function of the electric power monitoring apparatus 21 employed inside the facility 20, or may be alternatively contained as a partial function of either a telematics service providing server or a general ASP (Application Service Provider) server, which is independently provided from the facility 20. The above-described telematics service implies "a combination between a telecommunication technique and an information service." More specifically, the telematics service implies a service merged with the Internet and an on-vehicle information wireless technique.

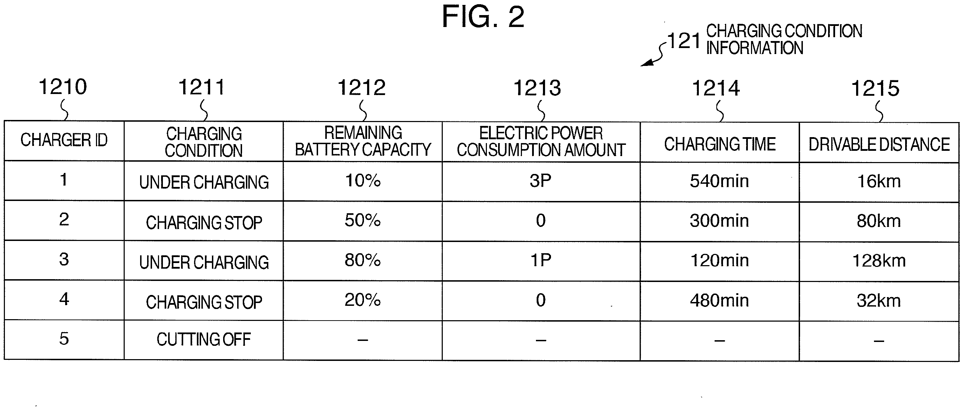

Fig. 2 is a diagram for showing an example of the vehicle-purpose battery charging condition information 121 which is used to manage the condition information of the vehicle-purpose batteries of the electrically-driven vehicles 30 coupled to the chargers 29 of the facility 20 in the first embodiment. Items of the vehicle-purpose battery charging condition information 121 are a charger ID 1210, a charging condition 1211, a vehicle-purpose battery remaining capacity 1212, an electric power consumption amount 1213, a charging time 1214, and a drivable distance 1215. The charger ID 1210 identifies a charger 29 to which an electrically-driven vehicle 30 is being coupled. The charging condition 1211 indicates whether or not the electrically-driven vehicle 30 is being coupled to the charger 29 of the facility 20, and whether or not the electrically-driven vehicle 30 is under charging condition in case that the electrically-driven vehicle 30 is being coupled thereto. The vehicle-purpose battery remaining capacity 1212 indicates a remaining electric power amount of a vehicle-purpose battery of the electrically-driven vehicle 30. The electric power consumption amount 1213 indicates electric power which is consumed while the vehicle-purpose battery of the electrically-driven vehicle 30 is under charging. The charging time 1214 represents a remaining time until charging of the vehicle-purpose battery of the electrically-driven vehicle 30 is accomplished. The drivable distance 1215 indicates a distance over which the electrically-driven vehicle 30 can be driven based upon the vehicle-purpose battery remaining capacity 1212 at the present time. A plurality of the above-described information are stored in the storage apparatus 120 for each of the chargers 29.

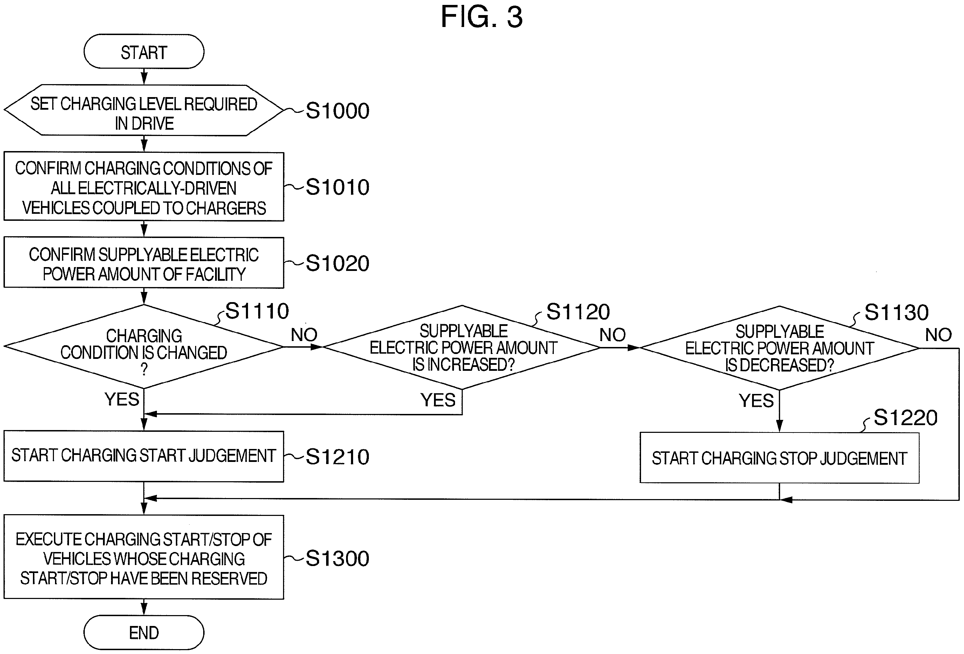

Fig. 3 is a flow chart for indicating that a process of the central processing unit (CPU) 110(or the electric power situation monitoring unit 111) mounted on the charging control apparatus 10 causes the charging start/stop judging unit 112 to judge whether charging is started, or charging is stopped based upon information acquired from the electric power monitoring apparatus 21 and the electrically-driven vehicle 30 in the first embodiment. The electric power situation monitoring unit 111 is initiated by the charging control apparatus 10, for example, in an interval of 1 minute to execute the processes.

In the first embodiment, as represented in the charging conditions of Fig. 2, it is assumed that such an electrically-driven vehicle 30 is newly coupled to a charger 29 whose charger ID 1210 is 4, while the vehicle-purpose battery remaining capacity 1212 of a vehicle-purpose battery of this electrically-driven vehicle 30 is 20%, the electric power consumption amount 1213 of which under charging is 3 P, and the charging time 1214 of which up to full charging is 480 minutes. Also, it is assumed that a supplyable electric power amount W of the facility 20 at this time is 6 P (symbol "P" indicates magnitude of electric power consumption amount).

As a preparation stage, the operator of the charging control apparatus 10 sets one or more pieces of charging levels which are lower than, or equal to the full charging level as a threshold which is required in order that the electrically-driven vehicle 30 is driven over an available (or service providable) distance (S1000). In the below-mentioned descriptions, the above-explained charging level is set as one charging level and the value is set to 30%.

Firstly, the electric power situation monitoring unit 111 acquires charging conditions of the respective chargers 29 and vehicle-purpose battery remaining capacities of the respective electrically-driven vehicles 30 from the electric power monitoring apparatus 21 of the facility 20, and the respective electrically-driven vehicles 30 (S1010). In this case, as the charging conditions of the chargers 29, the below-mentioned 3 charging conditions are present, namely, "cutting off" for indicating a condition under which an electrically-driven vehicle 30 is not coupled to a charger 29; "charging stop" for showing a condition under which an electrically-driven vehicle 30 has been coupled to a charger 29 and has not yet been charged; and "under charging" for representing a condition under which an electrically-driven vehicle 30 has been coupled to the charger 29 and is under charging. In this case, a vehicle-purpose battery remaining capacity of the electrically-driven vehicle 30 is indicated by a ratio of a present vehicle-purpose battery electric power amount with respect to a vehicle-purpose battery electric power amount when full charging is performed.

Next, the electric power situation monitoring unit 111 acquires a supplyable electric power amount of the facility 20 from the electric power monitoring apparatus 21 of the facility 20 (S1020).

Next, the electric power situation monitoring unit 111 compares the charging condition and the vehicle-purpose battery remaining capacity acquired in S1010 with the charging condition information 121 immediately before stored in the storage apparatus 120 to judge whether or not there is a change in the charging condition, or to confirm a change in the vehicle-purpose battery remaining capacity and judge whether or not the confirmed vehicle-purpose battery remaining capacity exceeds the charging level set in S1000 (S1110). In case that either there is the change in the charging condition or the vehicle-purpose battery remaining capacity exceeds the charging level, the process is advanced to S1210. In case that either there is no change in the charging condition or the vehicle-purpose battery remaining capacity does not exceed the charging level, the process is advanced to S1120.

In the first embodiment, since there is such an initial condition that the electrically-driven vehicle 30 is newly coupled to the charger 29, the charger ID 1210 of which is "4", it is recognized that the charging condition 1211 is changed from "cutting off" to "charging stop", so that the process is advanced to S1210. After the above-described judgement is made, the charging condition acquired in S1010 is overwritten to the charging condition information 121 of the storage apparatus 120 so as to update the charging condition information 121. As a result of updating, the charging condition information 121 of the storage apparatus 120 is illustrated in Fig. 2.

Assuming now that there is no change in the above-described charging condition and the above-explained vehicle-purpose battery remaining capacity does not exceed the charging level in S1110, the electric power situation monitoring unit 111 compares the supplyable electric power amount acquired in S1020 with a value of the supplyable electric power amount information 122 immediately before stored in the storage apparatus 120 to judge whether or not there is a change in the supplyable electric power amount (S1120). In case that the supplyable electric power amount acquired in S1020 has been increased from the value of the supplyable electric power information 122 of the storage apparatus 120, the process is advanced to S1210. In case that the supplyable electric power amount acquired in S1020 has not been increased from the value of the supplyable electric power information 122 of the storage apparatus 120, the process is advanced to S1130.

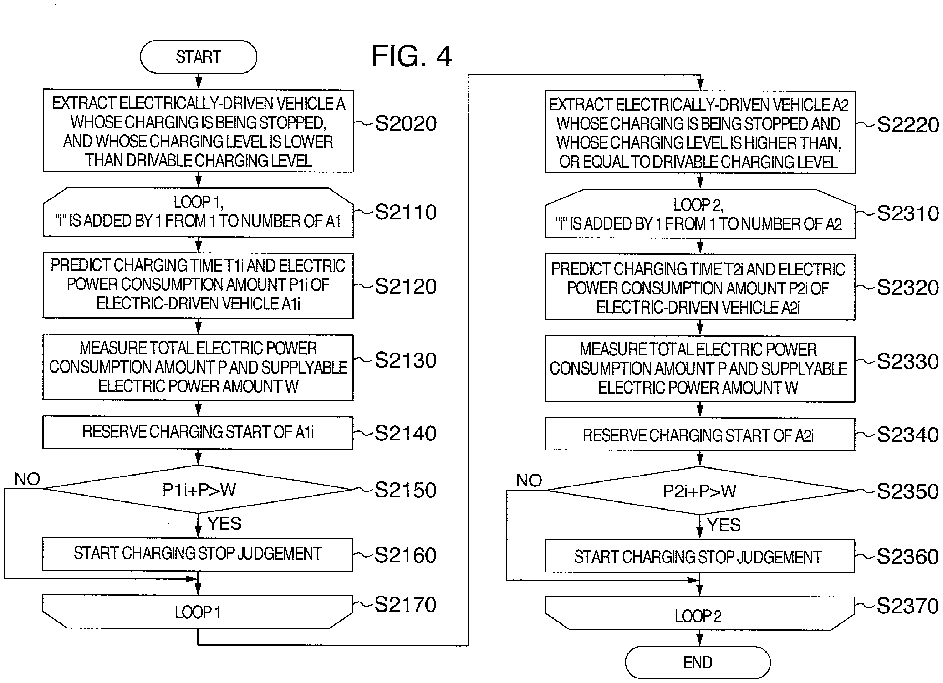

Either in case that there is the change in the above-described charging condition, otherwise the above-explained vehicle-purpose battery remaining capacity exceeds the charging level in S1110 or in case that the supplyable electric power amount is increased in S1120, the electric power situation monitoring unit 111 causes the charging start/stop judging unit 112 to execute a reservation process of a charging start (S1210). As to the reservation process of the charging start, a flow of the processes will be later explained with employment of a flow chart of Fig. 4.

Assuming now that the above-described supplyable electric power amount is not increased in S1120, the electric power situation monitoring unit 111 compares the supplyable electric power amount acquired in S1020 with a value of the supplyable electric power amount information 122 immediately before stored in the storage apparatus 120 to judge whether or not there is a change in the supplyable electric power amount (S1130). In case that the supplyable electric power amount acquired in S1020 has been decreased from the value of the supplyable electric power amount information 122 of the storage apparatus 120, the process is advanced to S1220. In case that the supplyable electric power amount acquired in S1020 has not been decreased from the value of the supplyable electric power amount information 122 of the storage apparatus 120, the process is accomplished. After the above-described judgement is made, the supplyable electric power amount acquired in S1020 is overwritten to the supplyable electric power amount information 122 of the storage apparatus 120 so as to update the supplyable electric power information 122.

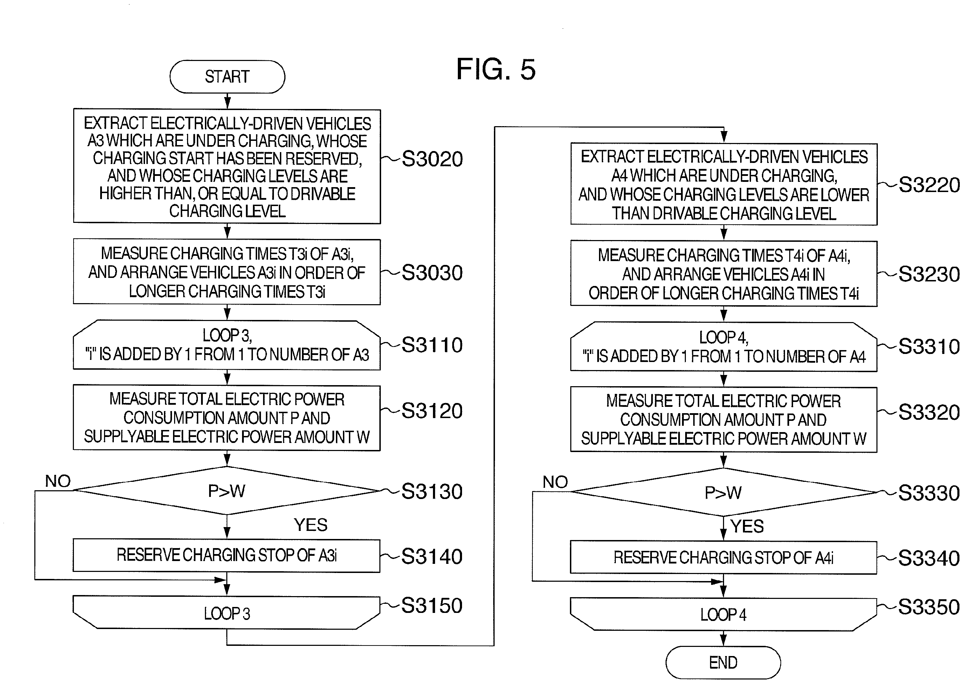

In case that the supplyable electric power amount has been decreased in S1130, the electric power situation monitoring unit 111 causes the charging start/stop judging unit 112 to execute a reservation process of a charging stop (S1220). As to the reservation process of the charging stop, a flow of the processes will be later explained with employment of a flow chart of Fig. 5.

In accordance with the charging condition information 121 of the storage apparatus 120, which has been updated by the reservation process of the charging start of S1210 and the reservation process of the charging stop of S1220, the electric power situation monitoring unit 111 executes the charging control instructing unit 114 in order to either start or stop charging of each of the electrically-driven vehicles 30 coupled to the chargers 29 (S2160). Also, in order to notify the charging conditions of the respective electrically-driven vehicles 30 to the users, the charging condition information 121 of the storage apparatus 120, which has been reconstructed in this process, is outputted through the output apparatus 140.

Fig. 4 is a flow chart for indicating that a process (reservation process of charging start by charging start/stop judging unit 112) of the central processing unit (CPU) 110 mounted on the charging control apparatus 10 reconstructs an order for effectively charging the vehicle-purpose batteries of the respective electrically-driven vehicles 30 based upon information acquired from the electric power monitoring apparatus 21 and the electrically-driven vehicles 30.

In the reservation process of the charging start by the charging start/stop judging unit 112, electrically-driven vehicles 30 (A1ᵢ: i = 1 to n) coupled to such chargers 29 having a charger ID 1210, while the charging level thereof is lower than the charging level set in S1000 and the charging condition 1211 thereof is "charging stop", are extracted by referring to the charging condition information 121 of the storage apparatus 120 (S2020). In the first embodiment, since the initial condition is established in which the charging level is set to 30% and the electrically-driven vehicle 30 whose vehicle-purpose battery remaining capacity 1212 is 20% and is newly coupled to such a charger 29 that the charger ID 1210 thereof is 4, one electrically-driven vehicle 30 coupled to such a charger 29 whose charger ID 1210 thereof is 4, is extracted, the charging condition 1211 of which is "charging stop", and the vehicle-purpose battery remaining capacity 1212 of which is 20%.

In the reservation process of the charging start by the charging start/stop judging unit 112, as to all the electrically-driven vehicles 30 (A1ᵢ: i = 1 to n) extracted in S2020, processes defined from the subsequent S2110 up to S2170 are executed in order to rearrange an order along which such electrically-driven vehicles 30 which quickly reach the above-described charging level are charged with a top priority among the electrically-driven vehicles 30 coupled to the chargers 29, the charging levels of which are lower than the above-described charging level (S2110). In the first embodiment, since the electrically-driven vehicle 30 extracted in S2020 is a single vehicle, the processes defined from S2110 up to S2170 may be carried out one time.

In the reservation process of the charging start by the charging start/stop judging unit 112, a prediction value "T1ᵢ" of a charging time up to the full charging, and a prediction value "P1ᵢ" of an electric power consumption amount required in charging at this time as to the electrically-driven vehicle 30 (A1ᵢ) are predicted by referring to the values acquired in S1010 (S2120). In the first embodiment, the charging time "T1ᵢ" of the electrically-driven vehicle 30 (A1ᵢ) is 480 minutes, and the electric power consumption amount "P1ᵢ" at this time is 3P.

In the reservation process of the charging start by the charging start/stop judging unit 112, a total value "P" of the electric power consumption amounts of all the electrically-driven vehicles 30 coupled to the chargers 29 is calculated by referring to the charging condition information 121 of the storage apparatus 120, and a supplyable electric power amount "W" of the facility 20 is acquired by referring to the supplyable electric power amount information 122 of the storage apparatus 120 (S2130). In the first embodiment, as can be understood from Fig. 2, the total value "P" of the electric power consumption amounts of all the electrically-driven vehicles 30 is 4P (= 3P + 0P + 1P + 0P), and the supplyable electric power amount "W" is 6P.

In the reservation process of the charging start by the charging start/stop judging unit 112, a charging start of the electrically-driven vehicle 30 (A1ᵢ) is reserved (S2140). Concretely speaking, the charging condition 1211 of the electrically-driven vehicle 30 (A1ᵢ) is updated from "charging stop" to "under charging"; the electric power consumption amount 1213 is updated from "0" to the above-described prediction value "P1ᵢ" of the electric power consumption amount; and the charging time 1214 is updated to be the above-described prediction value "T1ᵢ" of the charging time.

In the reservation process of the charging start by the charging start/stop judging unit 112, in case where charging of the electrically-driven vehicle 30 (A1ᵢ) whose charging was stopped is commenced, the supplyable electric power amount "W" of the facility 20 is compared with a summation between the electric power consumption amount "P1ᵢ" of the electrically-driven vehicle 30 (A1ᵢ) calculated in S2120 and the total electric power consumption amount "P" of all the electrically-driven vehicles 30 calculated in S2130 in order to confirm whether or not this summation exceeds the supplyable electric power amount "W" of the facility 20 (S2150). In case that the summation between the electric power consumption "P1ᵢ" of the electrically-driven vehicle 30 (A1ᵢ) and the total electric power consumption "P" exceeds the supplyable electric power amount "W", the process is advanced to S2160. In case that the summation between the electric power consumption "P1ᵢ" of the electrically-driven vehicle 30 (A1ᵢ) and the total electric power consumption "P" is smaller than, or equal to the supplyable electric power amount "W", the process is advanced to S2170. In the first embodiment, since the summation between the electric power consumption amount "P1ᵢ" and the total electric power consumption amount "P" is 7P (= 3P + 4P) and the supplyable electric power amount "W" is 6P, the process is advanced to S2160.

In case that the summation between the electric power consumption amount "P1ᵢ" and the total electric power consumption "P" exceeds the supplyable electric power amount "W" in S2150, the charging start/stop judging unit 112 executes the reservation process of the charging stop (S2160). In the first embodiment, in order that the summation between the electric power consumption amount "P1ᵢ" and the total electric power consumption amount "P" is set to be smaller than, or equal to the supplyable electric power amount "W", the charging stop of the electrically-driven vehicle 30 is reserved which is being coupled to the charger 29 whose charger ID 1210 is 3. Concretely speaking, the charging condition 121 of the charger 29 whose charger ID 1210 is 3 is updated from "under charging" to "charging stop", and the electric power consumption 1213 thereof is also updated from 1P to 0. With respect to the reservation process of the charging stop by the charging start/stop judging unit 112, a flow of processes will be later explained by employing a flow chart of Fig. 5.

In the reservation process of the charging start by the charging start/stop judging unit 112, the processes defined from S2110 to S2170 are carried out with respect to all the electrically-driven vehicles 30 (A1ᵢ: i = 1 ∼ n) extracted in S2020 (S2170). In case of i < n, the process is returned to S2120, and in case of i = n, the process is advanced to S2220.

In the reservation process of the charging start by the charging start/stop judging unit 112, electrically-driven vehicles 30 (A2ᵢ: i = 1 to n) coupled to such a charger 29 having the charger ID 1210, while the charging level thereof is higher than, or equal to the charging level set in S1000 and the charging condition 1211 thereof is "charging stop", are extracted by referring to the charging condition information 121 of the storage apparatus 120 (S2220). In the first embodiment, since charging of the electrically-driven vehicle 30 coupled to the charger 29 whose charger ID 1210 is 3 has been stopped due to the process of S2150, two sets of the electrically-driven vehicles 30 coupled to the chargers 29 whose charger IDs 1210 are 2 and 3 are extracted.

In the reservation process of the charging start by the charging start/stop judging unit 112, as to all the electrically-driven vehicles 30 (A2ᵢ: i = 1 to n) extracted in S2220, processes defined from the subsequent S2310 up to S2370 are executed in order to rearrange an order along which such electrically-driven vehicles 30 which quickly reach the full charging are charged with a top priority among the electrically-driven vehicles 30 coupled to the chargers 29, the charging levels of which are higher than, or equal to the above-described charging level (S2310). In the first embodiment, since the electrically-driven vehicles 30 extracted in S2220 are two vehicles, the processes defined from S2310 up to S2370 are carried out two times.

In the reservation process of the charging start by the charging start/stop judging unit 112, a prediction value "T2ᵢ" of a charging time up to the full charging, and a prediction value "P2ᵢ" of an electric power consumption amount required in charging at this time as to the electrically-driven vehicle 30 (A2ᵢ) are predicted by referring to the values acquired in S1010 (S2320). In the first embodiment, a charging time "T2ᵢ" of a first electrically-driven vehicle 30 (A2₁: being coupled to charger 29 whose charger ID 1210 is 2) is 300 minutes, and an electric power consumption amount "P2₁" at this time is 2P; and a charging time "T2₂" of a second electrically-driven vehicle 30 (A2₂: being coupled to charger 29 whose charger ID 1210 is 3) is 120 minutes, and an electric power consumption amount "P2₂" at this time is 1P.

In the reservation process of the charging start by the charging start/stop judging unit 112, a total value "P" of the electric power consumption amounts of all the electrically-driven vehicles 30 coupled to the chargers 29 is calculated by referring to the charging condition information 121 of the storage apparatus 120, and a supplyable electric power amount "W" of the facility 20 is acquired by referring to the supplyable electric power amount information 122 of the storage apparatus 120 (S2330). In the first embodiment, as can be understood, the total value "P" of the electric power consumption amounts of all the electrically-driven vehicles 30 is 6P (= 3P + 0P + 0P + 3P), and the supplyable electric power amount "W" is 6P, since charging of the electrically-driven vehicle 30 coupled to the charger 29 whose charger ID 1210 is 3 is stopped in S2160, and charging (3P) of the electrically-driven vehicle 30 coupled to the charger 29 whose charger ID 1210 is 4 is commenced in S2160.

In the reservation process of the charging start by the charging start/stop judging unit 112, a charging start of the electrically-driven vehicle 30 (A2ᵢ) is reserved (S2340). Concretely speaking, the charging condition 1211 of the electrically-driven vehicle 30 (A2ᵢ) is updated from "charging stop" to "under charging"; the electric power consumption amount 1213 is updated from "0" to the above-described prediction value "P1ᵢ" of the electric power consumption amount; and the charging time 1214 is updated to be the above-described prediction value "T1ᵢ" of the charging time.

In the reservation process of the charging start by the charging start/stop judging unit 112, in case where charging of the electrically-driven vehicle 30 (A2ᵢ) whose charging was stopped is commenced, the supplyable electric power amount "W" of the facility 20 is compared with a summation between the electric power consumption amount "P2ᵢ" of the electrically-driven vehicle 30 (A2ᵢ) calculated in S2320 and the total electric power consumption amount "P" of all the electrically-driven vehicles 30 calculated in S2330 in order to confirm whether or not this summation exceeds the supplyable electric power amount "W" of the facility 20 (S2350). In case that the summation between the electric power consumption "P2ᵢ" of the electrically-driven vehicle 30 (A2ᵢ) and the total electric power consumption "P" exceeds the supplyable electric power amount "W", the process is advanced to S2360. In case that the summation between the electric power consumption "P2ᵢ" of the electrically-driven vehicle 30 (A2i) and the total electric power consumption "P" is smaller than, or equal to the supplyable electric power amount "W", the process is advanced to S2370. In the first embodiment, since the summation between the electric power consumption amount "P2i" and the total electric power consumption amount "P" exceeds the supplyable electric power amount "W" as to both the first and second electrically-driven vehicles A2₁ and A2₂, the process is advanced to S2360.

In case that the summation between the electric power consumption amount "P2ᵢ" and the total electric power consumption "P" exceeds the supplyable electric power amount "W" in S2350, the charging start/stop judging unit 112 executes the reservation processes of the charging stop (S2360). In the first embodiment, in order that the summation between the electric power consumption amount "P2₁" or "P2₂" and the total electric power consumption amount "P" is set to be smaller than, or equal to the supplyable electric power amount "W", the charging stop of the electrically-driven vehicle 30 is reserved which is being coupled to the charger 29 whose charger ID 1210 is 2, and the charging stop of the electrically-driven vehicle 30 is reserved which is being coupled to the charger 29 whose charger ID 1210 is 3. Concretely speaking, the charging condition 1211 of the charger 29 whose charger ID 1210 is 2 is updated from "under charging" to "charging stop", and the electric power consumption 1213 thereof is also updated from 2P to 0. Also, the charging condition 1211 of the charger 29 whose charger ID 1210 is 3 is updated from "under charging" to "charging stop", and the electric power consumption 1213 thereof is also updated from 1P to 0. With respect to the reservation processes of the charging stop by the charging start/stop judging unit 112, a flow of processes will be later explained by employing a flow chart of Fig. 5.

In the reservation process of the charging start by the charging start/stop judging unit 112, the processes defined from S2310 to S2370 are carried out with respect to all the electrically-driven vehicles 30 (A2ᵢ: i = 1 ∼ n) extracted in S2220 (S2370). In case of i < n, the process is returned to S2320, and in case of i = n, the process is accomplished.

Fig. 5 is a flow chart for indicating that a process (reservation process of charging stop by charging start/stop judging unit 112) of the central processing unit (CPU) 110 mounted on the charging control apparatus 10 reconstructs an order for effectively charging the vehicle-purpose batteries of the respective electrically-driven vehicles 30 based upon information acquired from the electric power monitoring apparatus 21 and the electrically-driven vehicles 30.

In the reservation process of the charging stop by the charging start/stop judging unit 112, electrically-driven vehicles 30 (A3ᵢ: i = 1 to n) coupled to such chargers 29 having a charger ID 1210, whose charging level is larger than, or equal to the charging level set in S1000, while the charging condition 1211 is either "under charging", or "under charge reservation", are extracted by referring to the charging condition information 121 of the storage apparatus 120 (S3020). In the first embodiment, such an initial condition is established in which the charging level is set to 30% and charging of the electrically-driven vehicle 30 whose vehicle-purpose battery remaining capacity 1212 is 20% is newly reserved to such a charger 29 that the charger ID 1210 thereof is 4, with respect to the charging condition information 121 of Fig. 2. As a consequence, one electrically-driven vehicle 30 coupled to such a charger 29 whose charger ID 1210 is 3 is extracted, while the charging condition 1211 of which is "under charging", and the vehicle-purpose battery remaining capacity 1212 of which is 80%.

In the reservation process of the charging stop by the charging start/stop judging unit 112, charging times "T3ᵢ" of the respective electrically-driven vehicles 30 (A3ᵢ) up to full charging extracted in S3020 are acquired by referring to the charging condition information 121 of the storage apparatus 120, and the electrically-vehicles 30 (A3ᵢ) are rearranged in the order of longer charging times "T3ᵢ" (S3030).

In the reservation process of the charging stop by the charging start/stop judging unit 112, as to all the electrically-driven vehicles 30 (A3ᵢ: i = 1 to n) extracted in S3020, processes defined from the subsequent S3110 up to S3150 are executed in order to rearrange an order along which such electrically-driven vehicles 30 which quickly reach the full charging with a top priority among the electrically-driven vehicles 30 coupled to the chargers 29, the charging levels of which are higher than, or equal to the above-described charging level (S3110). In the first embodiment, since the electrically-driven vehicle 30 extracted in S3020 is a single vehicle, the processes defined from S3110 up to S3150 may be carried out only one time.

In the reservation process of the charging stop by the charging start/stop judging unit 112, a total value "P" of the electric power consumption amounts of all the electrically-driven vehicles 30 coupled to the chargers 29 is calculated by referring to the charging condition information 121 of the storage apparatus 120, and a supplyable electric power amount "W" of the facility 20 is acquired by referring to the supplyable electric power amount information 122 of the storage apparatus 120 (S3120). In the first embodiment, as can be understood from Fig. 2, the total value "P" of the electric power consumption amounts of all the electrically-driven vehicles 30 is 7P (= 3P + 0P + 1P + 3P), and the supplyable electric power amount "W" is 6P, since such an initial condition is established that the charging of the electrically-driven vehicles 30 whose electric power consumption amount 1213 is 3P newly reserved which are coupled to the chargers 29 whose charger IDs 1210 are 4.

In the reservation process of the charging stop by the charging start/stop judging unit 112, the supplyable electric power amount "W" of the facility 20 is compared with the total electric power consumption amount "P" of all the electrically-driven vehicles 30 calculated in S3120 in order to confirm whether or not a total electric power consumption amount of all the electrically-driven vehicles 30 coupled to the chargers 29 exceeds the supplyable electric power amount "W" of the facility 20 (S3130). In case that the total electric power consumption "P" exceeds the supplyable electric power amount "W", the process is advanced to S3140. In case that the total electric power consumption "P" is smaller than, or equal to the supplyable electric power amount "W", the process is advanced to S3150. In the first embodiment, since the total electric power consumption amount "P" is 7P and the supplyable electric power amount "W" is 6P, the process is advanced to S3140.

In case that the total electric power consumption "P" exceeds the supplyable electric power amount "W" in S3130, in the reservation process of the charging stop by the charging start/stop judging unit 112, the charging stop of the electrically-driven vehicle 30 (A3ᵢ) is reserved, or the charging reservation is canceled (S3140). In the first embodiment, in order that the total electric power consumption amount "P" is set to be smaller than, or equal to the supplyable electric power amount "W", the charging stop of the electrically-driven vehicle 30 is reserved which is being coupled to the charger 29 whose charger ID 1210 is 3. Concretely speaking, the charging condition 121 of the electrically-driven vehicle 30 coupled to the charger 29 whose charger ID 1210 is 3 is updated from "under charging" to "charging stop", and the electric power consumption 1213 thereof is also updated from 1P to 0.

In the reservation process of the charging stop by the charging start/stop judging unit 112, the processes defined from S3120 to S3140 are carried out with respect to all the electrically-driven vehicles 30 (A3ᵢ: i = 1 ∼ n) extracted in S3020 (S3150). In case of i < n, the process is returned to S3110, and in case of i = n, the process is advanced to S3220.

In the reservation process of the charging stop by the charging start/stop judging unit 112, electrically-driven vehicles 30 (A4ᵢ: i = 1 to n) coupled to chargers 29 having the charger ID 1210, the charging levels of which are smaller than the charging level set in S1000 and the charging condition 1211 of which is "under charging", are extracted by referring to the charging condition information 121 of the storage apparatus 120 (S3220). In the first embodiment, such an initial condition is established that the charging level is set to 30% and charging of the electrically-driven vehicle 30 whose vehicle-purpose battery remaining capacity is 20% is newly reserved with respect to the charger 29 whose charger ID 1210 is 4, with respect to the charging condition information 121 of Fig. 2. As a consequence, two sets of the electrically-driven vehicles 30 coupled to the chargers 29 whose charger IDs 1210 are 1 and 4 are extracted.

In the reservation process of the charging stop by the charging start/stop judging unit 112, charging times "T4ᵢ" of the respective electrically-driven vehicles 30 (A4ᵢ) up to full charging extracted in S3220 are acquired by referring to the charging condition information 121 of the storage apparatus 120, and the electrically-driven vehicles 30 (A4ᵢ) are rearranged in the order of longer charging times "T4ᵢ" (S3230).

In the reservation process of the charging stop by the charging start/stop judging unit 112, as to all the electrically-driven vehicles 30 (A4ᵢ: i = 1 to n) extracted in S3220, processes defined from the subsequent S3310 up to S3350 are executed in order to rearrange an order along which such electrically-driven vehicles 30 which quickly reach the full charging are charged with a top priority among the electrically-driven vehicles 30 coupled to the chargers 29, the charging levels of which are lower than, the above-described charging level (S3310). In the first embodiment, since the electrically-driven vehicles 30 extracted in S3220 are two vehicles, the processes defined from S3310 up to S3350 are carried out two times.

In the reservation process of the charging stop by the charging start/stop judging unit 112, a total value "P" of the electric power consumption amounts of all the electrically-driven vehicles 30 coupled to the chargers 29 is calculated by referring to the charging condition information 121 of the storage apparatus 120, and a supplyable electric power amount "W" of the facility 20 is acquired by referring to the supplyable electric power amount information 122 of the storage apparatus 120 (S3320). In the first embodiment, as can be understood from Fig. 2, the total value "P" of the electric power consumption amounts of all the electrically-driven vehicles 30 is 6P (= 3P + 0P + 0P + 3P), and the supplyable electric power amount "W" is 6P, since such an initial condition is established that the charging of the electrically-driven vehicle 30 whose electric power consumption amount 1213 is 3P is newly reserved which is coupled to the charger 29 whose charger ID 1210 is 4, and the charging stop of the electrically-driven vehicle 30 coupled to the charger 29 whose charger ID 1210 is 3 is reserved in S3140.

In the reservation process of the charging stop by the charging start/stop judging unit 112, the supplyable electric power amount "W" of the facility 20 is compared with the total electric power consumption amount "P" of all the electrically-driven vehicles 30 calculated in S3320 in order to confirm whether or not a total electric power consumption amount of all electrically-driven vehicles 30 coupled to the chargers 29 exceeds the supplyable electric power amount "W" of the facility 20 (S3330). In case that the total electric power consumption "P" exceeds the supplyable electric power amount "W", the process is advanced to S3340. In case that the total electric power consumption "P" is smaller than, or equal to the supplyable electric power amount "W", the process is advanced to S3350. In the first embodiment, since the total electric power consumption amount "P" is 6P and the supplyable electric power amount "W" is 6P, the process is advanced to S3350.

In case that the total electric power consumption "P" exceeds the supplyable electric power amount "W" in S3330, in the reservation process of the charging stop executed by the charging start/stop judging unit 112, the charging stop of the electrically-driven vehicle 30 (A4ᵢ) is reserved (S3340).

In the reservation process of the charging stop by the charging start/stop judging unit 112, the processes defined from S3310 to S3350 are carried out with respect to all the electrically-driven vehicles 30 (A4ᵢ: i = 1 ∼ n) extracted in S3220 (S3350). In case of i < n, the process is returned to S3310, and in case of i = n, the process is accomplished.

### <SECOND EMBODIMENT>

Referring now to drawings, a description is made of a second embodiment. Similarly, in the second embodiment, a charging control apparatus acquires condition information of vehicle-purpose batteries mounted on electrically-driven vehicles from the electrically-driven vehicles, acquires a supplyable electric power amount from an electric power monitoring apparatus of a facility, judges timing at which charging of the vehicle-purpose battery of each of the electrically-driven vehicles is started and timing at which charging of the vehicle-purpose battery thereof is stopped based upon the vehicle-purpose battery condition and the supplyable electric power amount, and then, transmits a charge starting instruction and a charge stopping instruction to the electrically-driven vehicle.

Since a diagram for exemplifying an arrangement of a charging control system according to the second embodiment is equivalent to the diagram of Fig. 1 for exemplifying the arrangement of the charging control system according to the first embodiment, an explanation thereof is omitted.

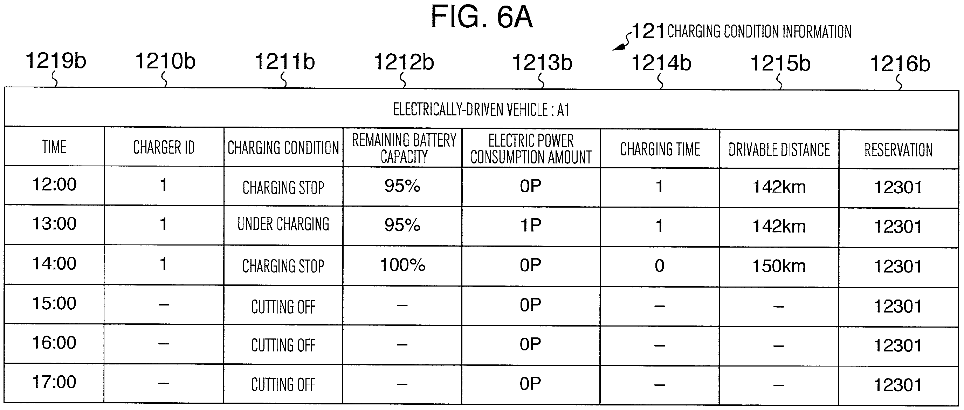

Fig. 6A to Fig. 6C are diagrams for showing an example of vehicle-purpose battery charging condition information 121 which is utilized so as to manage present condition information and plans of vehicle-purpose batteries of electrically-driven vehicles 30. In the second embodiment, the vehicle-purpose battery charging condition information 121 is managed for each of the electrically-driven vehicles 30.

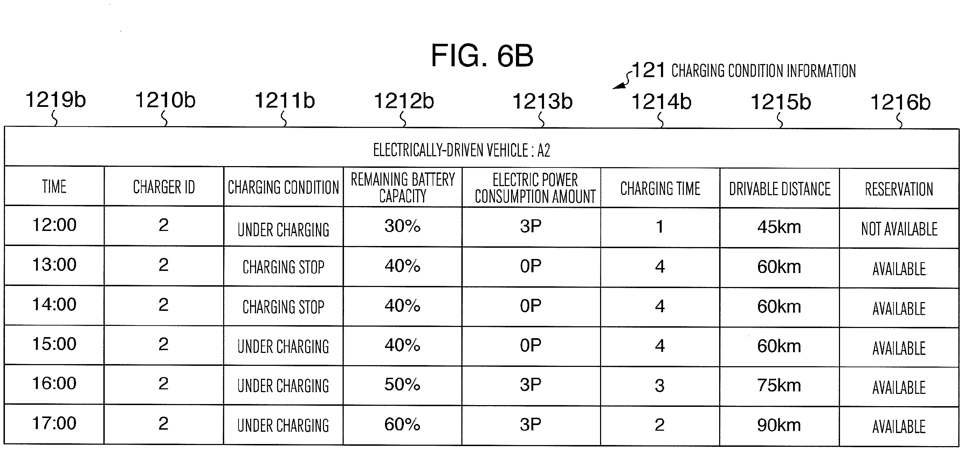

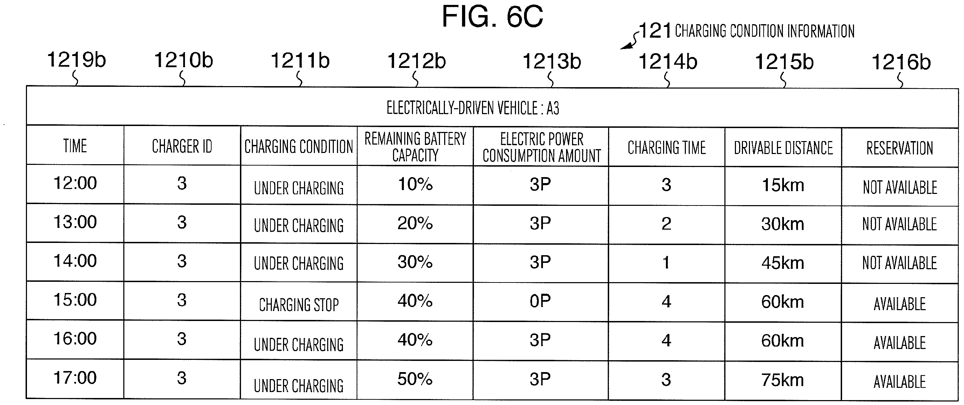

Fig. 6A is an example of vehicle-purpose charging condition information 121 of an electrically-driven vehicle "A1" from 12:00 to 16:00; Fig. 6B is an example of vehicle-purpose charging condition information 121 of an electrically-driven vehicle "A2" from 12:00 to 16:00; and Fig. 6C is an example of vehicle-purpose charging condition information 121 of an electrically-driven vehicle "A3" from 12:00 to 16:00.

Items of the vehicle-purpose battery charging condition information 121 are time 1219b indicative of either the present time or the scheduled time, a charger ID 1210b, a charging condition 1211b, a vehicle-purpose battery remaining capacity 1212b, an electric power consumption amount 1213b, a charging time 1214b, a drivable distance 1215b, and a reservation 1216b. The charger ID 1210b identifies a charger 29 to which an electrically-driven vehicle 30 is being coupled. The charging condition 1211b indicates whether or not an electrically-driven vehicle 30 is being coupled to a charger 29 of the facility 20, and whether or not the electrically-driven vehicle 30 is under charging operation in case that this electrically-driven vehicle 30 is being coupled thereto. The vehicle-purpose battery remaining capacity 1212b indicates a remaining electric power amount of a vehicle-purpose battery of the electrically-driven vehicle 30. The electric power consumption amount 1213b indicates an amount of electric power which is consumed while the vehicle-purpose battery of the electrically-driven vehicle 30 is under charging. The charging time 1214b represents a length of a remaining time until a remaining capacity of the vehicle-purpose battery of the electrically-driven vehicle 30 reaches a next charging level. The drivable distance 1215b represents a distance over which the electrically-driven vehicle 30 can be driven based upon the vehicle-purpose battery remaining capacity 1212b at a time instant indicated by each time. The reservation 1216b indicates whether or not utilization of the electrically-driven vehicle 30 can be reserved. A plurality of the above-described information are stored in the storage apparatus 120 for each of the electrically-driven vehicles 30. In case that the electrically-driven vehicle 30 is not coupled to the charger 29 of the facility 20, values of the charger ID 1210b, the vehicle-purpose battery remaining capacity 1212b, the charging time 1214b, and the drivable distance 1215b are expressed by "-" (minus, or dash).

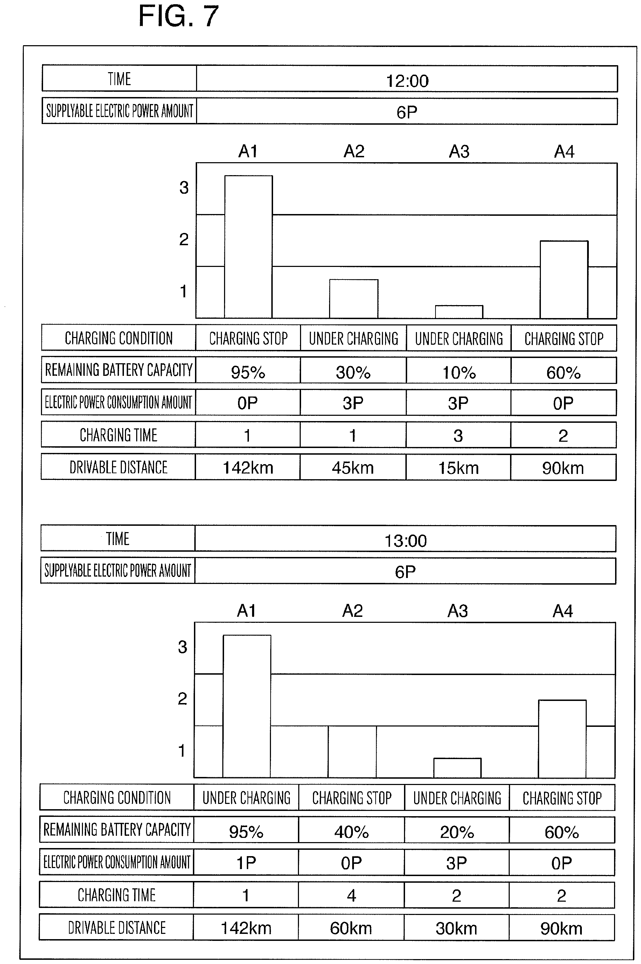

Fig. 7 is an example of a screen on which the vehicle-purpose battery condition information 121 of Fig. 2 is illustrated for an operator. Since a remaining battery capacity is indicated by a histogram for each of the electrically-driven vehicles 30, a charging time up to the next charging level can be intuitively grasped.

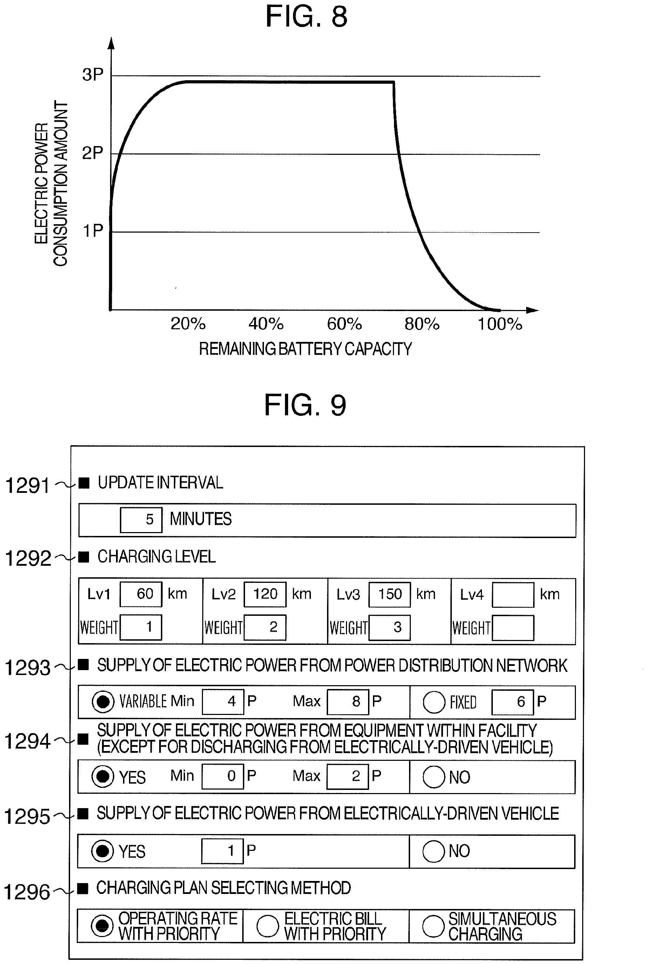

Fig. 8 is a diagram for showing an example of electric power consumption amounts used in charging with respect to vehicle-purpose battery remaining capacities of the electrically-driven vehicle 30. In the second embodiment, as indicated in Fig. 8, when the vehicle-purpose battery remaining capacities are 0% to 80%, the electric power consumption amount is 3P; when the vehicle-purpose battery remaining capacities are 80% to 100%, the electric power consumption amount is 1P; and thus, an electric power amount consumed in charging is changed, depending upon a vehicle-purpose battery remaining capacity.

Also, in general, a rechargeable battery has a feature that the nearer a charging condition reaches a full charging condition, the slower a charging speed becomes. As a consequence, in the second embodiment, it is assumed that a charging speed when the vehicle-purpose battery remaining capacities are 0% to 80% becomes two times higher than a charging speed when the vehicle-purpose battery remaining capacities are 80% to 100%. In other words, it is assumed that a time required for charging when the vehicle-purpose battery remaining capacity becomes 30% to 40 % is equal to a time required for charging when the vehicle-purpose battery remaining capacity becomes 95% to 100%.

Fig. 9 is an example of a screen on which an operator sets initial values as a preparation stage in order to realize a charging control of each of the electrically-driven vehicles 30. The screen for setting the initial values accepts any one, or more pieces of items such as an update interval 1291, a charging level 1292, a supply of electric power 1293 from a power distribution network, a supply of electric power 1294 from equipements within the facility 20, a supply of electric power 1295 from an electrically-driven vehicle 30, a charging plane selecting method 1296 and the like.

In the update interval 1291, setting of an interval in case that a process (will be discussed later) of the electric power situation monitoring unit 111 is periodically executed is accepted.

It is assumed that as to the charging level 1292, a plurality of charging levels (up to 4 levels in maximum in second embodiment) can be set in the order of lower charging levels in response to a use of a person who uses the electrically-driven vehicle 30. In each of the charging levels, setting of a drivable distance as a necessary minimum limit distance and of a weight is accepted. A weight is to determine a priority order for charging between different charging levels, and it is so defined in the second embodiment that when the charging level 1292 is set with a smaller weight, a vehicle-purpose battery is charged with a priority.

The supply of electric power 1293 from the power distribution network accepts that a selection is made whether or not a maximum value of an electric power supplying amount from the power distribution network is fixed based upon a contract engaged with an electric power supplier, or whether or not the maximum value of the electric power supplying amount is varied which is like a smart grid where a power generating apparatus such as a solar energy generation and a wind energy generation is handled, the electric power generating amount of which is varied; in case where the maximum value of the electric power supplying amount is fixed, this maximum value is set; and in case where the maximum value of the electric power supplying amount is varied, a variation range of this maximum value is set.

The supply of electric power 1294 from the equipments within the facility 20 accepts that a selection is made whether or not supplies of electric power (except for supply of electric power due to discharging from electrically-driven vehicle 30) from the equipements within the facility 20 such as the facility-purpose battery 23 and the solar cell 24 are permitted in order to charge the electrically-driven vehicle 30; and in case that the supplies of the electric power are permitted, a variation range of a maximum value of the electric power supplying amount is set.

The supply of electric power 1295 from the electrically-driven vehicle 30 accepts that a selection is made whether or not a supply of electric power caused by a discharge function of the electrically-driven vehicle 30 is permitted; and in case that the supply of the electric power is permitted, a maximum value of the electric power supplying amount is set.

The values which are set in the supply of electric power 1293 from the power distribution network, the supply of electric power 1294 from the equipments within the facility 20, and the supply of electric power 1295 from the electrically-driven vehicle 30 are utilized when such an electric power supplying amount is estimated which can be expected as a necessary minimum limit amount required to make up a charging plan of the electrically-driven vehicle 30.

The charging plan selecting method 1296 accepts a selection of the charging plans from among options; such as whether or not charging is carried out by giving a top priority to an operating ratio of the electrically-driven vehicles 30, whether or not charging is performed within such a time range that an electric bill is inexpensive by giving a top priority to the electric bill, or whether or not charging is equally carried out at the same time without discriminating of any of the electrically-driven vehicles 30.

A plurality of information are stored via the operator-purpose input apparatus 140 into the storage apparatus 120 as the setting information 129, which are set in the update interval 1291, the charging level 1292, the supply of electric power 1293 from the power distribution network, the supply of electric power 1294 from the equipments within the facility 20, the supply of electric power 1295 from the electrically-driven vehicle 30, and the charging plan selecting method 1296 of Fig. 9.

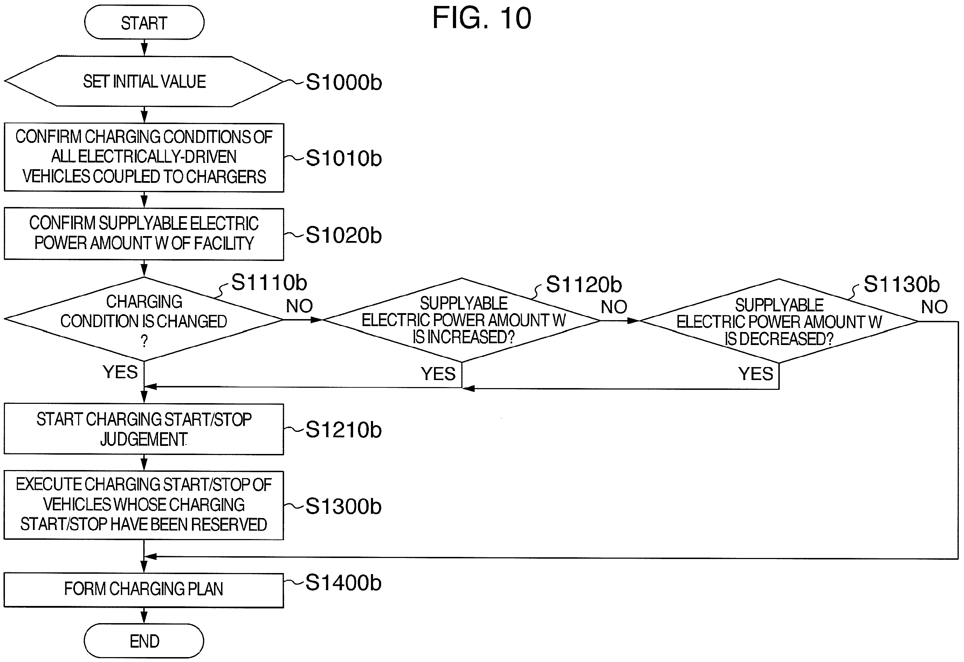

Fig. 10 is a flow chart for indicating that in the second embodiment, a process (electric power situation monitoring unit 111) of the central processing unit (CPU) 110 mounted on the charging control apparatus 10 causes the charging start/stop judging unit 112 to judge whether a process is carried out based upon information acquired from the electric power monitoring apparatus 21 and the electrically-driven vehicle 30.

In the second embodiment, as represented in the charging condition information 121 of Fig. 6A to Fig. 6C, the below-mentioned assumption is made: That is, while the electrically-driven vehicle A2 is coupled to the charger 29 whose charger ID 1210b is 2 at a time instant when the time 1219b is 12:00, this electrically-driven vehicle A2 in which the charging condition 1211b is "under charging", the vehicle-purpose battery remaining capacity 1212b is 30%, the electric power consumption amount 1213b during charging operation is 3P, the charging time 1214b up to the next charging level is 1, reaches the next charging level 1 at a time instant when the time 1219b is 13:00. Also, it is assumed that a supplyable electric power amount W of the facility 20 at this time instant is 6P.

As a preparation stage, the operator of the charging control apparatus 10 sets the below-mentioned items as a threshold which is required in order that the electrically-driven vehicle 30 is driven over an available (or service providable) distance from the screen on which the initial values of Fig. 8 are set, namely, an update interval when the below-mentioned processes are periodically performed in a repetition manner, a charging level lower than, or equal to the full charging level, a supplyable electric power amount of the facility 20, which can be expected as a minimum limit amount, and a charging plan selecting method (S1000b). The electric power situation monitoring unit 111 reads out the update interval 1291 of the setting information 129 stored in the storage apparatus 120, and executes the below-mentioned process in the interval of the update interval 1291. In the second embodiment, while the above-described charging levels are three levels, values of these three charging levels are set to 60 Km, 120 Km, and 150 Km, respectively. A description is made of such an assumption that this process is executed at 13:00 in the below-mentioned descriptions.

Firstly, the electric power situation monitoring unit 111 acquires charging conditions of the respective electrically-driven vehicles 30 at the present time, vehicle-purpose battery remaining capacities, or drivable distances of the respective electrically-driven vehicles 30 from the electric power monitoring apparatus 21 of the facility 20, and the respective electrically-driven vehicles 30. Also, the electric power situation monitoring unit 111 compares the above-described drivable distance with the charging level 1292 of the setting information 1292 of the storage apparatus 120 to calculate a charging time up to the next charging level (S1010b).

In this case, as the charging conditions of the chargers 29, the below-mentioned 3 charging conditions are present, namely, "cutting off" for indicating a condition under which an electrically-driven vehicle 30 is not coupled to a charger 29; "charging stop" for showing a condition under which an electrically-driven vehicle 30 has been coupled to a charger 29 and has not yet been charged; and "under charging" for representing a condition under which an electrically-driven vehicle 30 has been coupled to the charger 29 and is under charging. In this case, a vehicle-purpose battery remaining capacity of the electrically-driven vehicle 30 is indicated by a ratio of a present vehicle-purpose battery electric power amount with respect to a vehicle-purpose battery electric power amount when full charging is performed. In case that a drivable distance cannot be acquired from an electrically-driven vehicle 30, while a vehicle-purpose battery electric power amount when full charging is performed and an electricity cost are prepared, the drivable distance is calculated based upon these values and a vehicle-purpose battery remaining capacity.

Next, the electric power situation monitoring unit 111 acquires a supplyable electric power amount of the facility 20 from the electric power monitoring apparatus 21 of the facility 20 (S1020b).

Next, the electric power situation monitoring unit 111 compares the charging condition and the vehicle-purpose battery remaining capacity acquired in S1010b with the charging condition information 121 immediately before stored in the storage apparatus 120 to judge whether or not there is a change in the charging condition, or to confirm a change in the vehicle-purpose battery remaining capacity and judge whether or not the confirmed vehicle-purpose battery remaining capacity has reached the charging level set in S1000b (S1110b). In case that either there is the change in the charging condition or the vehicle-purpose battery remaining capacity has reached the charging level, the process is advanced to S1210b. In case that either there is no change in the charging condition or the vehicle-purpose battery remaining capacity has not reached the charging level, the process is advanced to S1120b.

In the second embodiment, since there is such an initial condition that the electrically-driven vehicle 2A reaches the next charging level 1 at 13:00, since the drivable distance of the electrically-driven vehicle A2 has reached 60 Km defined in the charging level 1, the process is advanced to S1210b. After the above-described judgement is made, the charging condition acquired in S1010b is overwritten to the charging condition information 121 of the storage apparatus 120 so as to update the charging condition information 121. As a result of updating, the charging condition information 121 of the storage apparatus 120 becomes such a column that the time 1219b of Fig. 6B is 13:00.

Assuming now that there is no change in the above-described charging condition and the above-explained vehicle-purpose battery remaining capacity has not reached the charging level 1 in S1110b, the electric power situation monitoring unit 111 compares the supplyable electric power amount acquired in S1020b with a value of the supplyable electric power amount information 122 immediately before stored in the storage apparatus 120 to judge whether or not there is a change in the supplyable electric power amount (S1120b). In case that the supplyable electric power amount acquired in S1020b has been increased from the value of the supplyable electric power information 122 of the storage apparatus 120, the process is advanced to S1210b. In case that the supplyable electric power amount acquired in S1020b has not been increased from the value of the supplyable electric power information 122 of the storage apparatus 120, the process is advanced to S1130b.

Assuming now that the above-described supplyable electric power amount has not been increased in S1120b, the electric power situation monitoring unit 111 compares the supplyable electric power amount acquired in S1020b with a value of the supplyable electric power amount information 122 immediately before stored in the storage apparatus 120 to judge whether or not there is a change in the supplyable electric power amount (S1130b). In case that the supplyable electric power amount acquired in S1020b has been decreased from the value of the supplyable electric power amount information 122 of the storage apparatus 120, the process is advanced to S1210b. In case that the supplyable electric power amount acquired in S1020b has not been decreased from the value of the supplyable electric power amount information 122 of the storage apparatus 120, the process is advanced to S1400b. After the above-described judgement is made, the supplyable electric power amount acquired in S1210b is overwritten to the supplyable electric power amount information 122 of the storage apparatus 120 so as to update the supplyable electric power information 122.

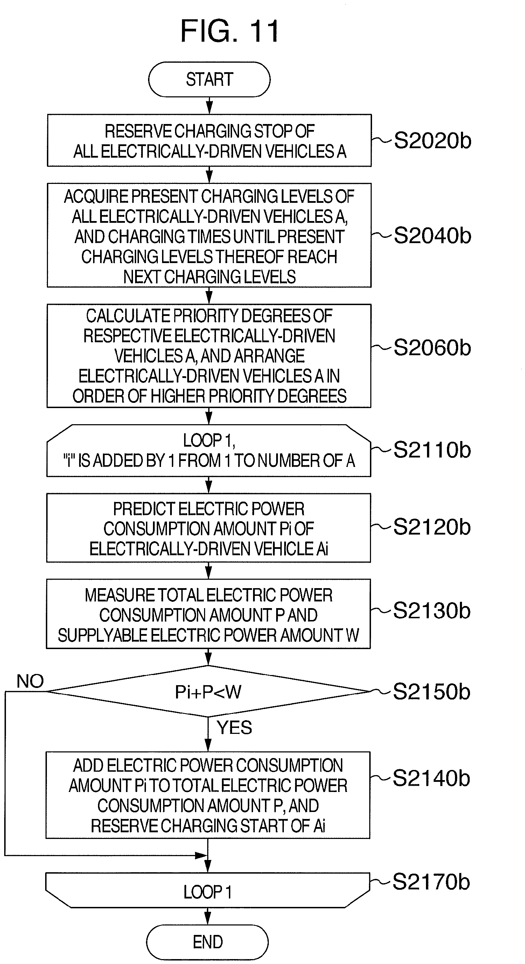

In case that there is the change in the above-explained charging condition, or the above-explained vehicle-purpose battery remaining capacity has reached the charging level 1 in S1110b, otherwise, in case that the supplyable electric power amount has been increased in S1120b, or the supplyable electric power amount has been decreased in S1130b, the electric power situation monitoring unit 111 causes the charging start/stop judging unit 112 to execute a process thereby (S1210b). As to the charging start/stop judging unit 112, a flow of the processes will be later explained with employment of a flow chart of Fig. 11.

In accordance with the charging condition information 121 of the storage apparatus 120, which has been updated by the charging start or charging stop judgement of S1210b, the electric power situation monitoring unit 111 executes a process of the charging control instructing unit 114 in order to either start charging or stop charging of each of the electrically-driven vehicles 30 coupled to the chargers 29 (S1300b).

Since the electric power situation monitoring unit 111 executes the processes defined from S1010b up to S1210b as to situations not only at the present time instant, but also at a time instant after either several minutes or several hours pass from now on, the electric power monitoring unit 111 produces a charging plan as shown in Fig. 6B that the time 1219b is subsequent to 14:00 (S1400b).

When the charging plan is produced, in S1010b, the electric power situation monitoring unit 111 predicts a charging condition of either the present time instant or a time instant before the present time instant, a charging condition at a specific time instance from either a vehicle-purpose battery remaining capacity or a drivable distance of each of the electrically-driven vehicles 30, and either a vehicle-purpose battery remaining capacity or a drivable distance of each of the respective electrically-driven vehicles.

When the charging plan is produced, in S1020b, the electric power situation monitoring unit 111 may define the supplyable electric power amount of the facility 20, which is set in S1000b and can be expected as the minimum limit amount, as a supplyable electric power amount W of the facility 20, otherwise, may previously define variation information (for instance, 13:00 is 6P, 14:00 is 7P, 15:00 is 8P etc.) such as a supplyable electric power amount of the facility 20 every time range as the supplyable electric power amount W of the facility 20.

In order to notify the charging plans of the respective electrically-driven vehicles 30 to the operator, the charging condition information 121 rearranged in this process and stored in the storage apparatus 120 is shaped as illustrated in the screen of Fig. 7 to be outputted via the operator-purpose output apparatus 150.

Fig. 11 is a flow chart for indicating that a process (charging start/stop judging unit 112) of the central processing unit (CPU) 110 mounted on the charging control apparatus 10 reconstructs an order for effectively charging the vehicle-purpose batteries of the respective electrically-driven vehicles 30 based upon information acquired from the electric power monitoring apparatus 21 and the electrically-driven vehicles 30.

The charging start/stop judging unit 112 temporarily reserves all the electrically-driven vehicles 30 whose the charging condition 1211 is "under charging", as "charging stop" by referring to the charging condition information 121 of the storage apparatus 120 (S2020b). In the second embodiment, since such electrically-driven vehicles 30 that the charging condition 1211b thereof is "under charging" at the time instant when the time 1219b of Fig. 6B and 6C is 12:00 correspond to the electrically-driven vehicle "A2" and the electrically-driven vehicle"A3", the charging start/stop judging unit 112 temporarily reserves the charging conditions 1211b of the electrically-driven vehicle "A1" and the electrically-driven vehicle "A3" as "charging stop" at a time instant when the time 1219b is 13:00.

Referring to the charging condition information 121 of the storage apparatus 120, the charging start/stop judging unit 112 acquires present charging levels of all the electrically-driven vehicles 30 (Ai : i = 1 to n), and charging times until all the electrically-driven vehicles 30 reach the subsequent charging level (S2040b). The above-explained charging levels at this time instant can be acquired by comparing the drivable distance 1215 of the charging condition information 121 of the storage apparatus 120 with the charging level 1292 of the setting information 129 of the storage apparatus 120. In the second embodiment, the charging levels {L1, L2, L3} of the electrically-driven vehicles 30 {A1, A2, A3} at the time instant of 13:00 are {2, 1,0}, and the charging times {T1, T2, T3} until the electrically-driven vehicles 30 reach the subsequent charging level are {1, 4, 2}.

The charging start/stop judging unit 112 calculates priority degrees of all the electrically-driven vehicles 30 (Ai: i = 1 to n) by multiplying the values acquired in S2040b by the weights of the charging level 1292 with reference to the charging level 1292 of the setting information 129 of the storage apparatus 120, and rearranges the calculated priority degrees in the order of higher priority degrees (S2060b). In this case, it is assumed that a priority degree "Ri" of the electrically-driven vehicle "Ai" is calculated by multiplying a weight "a (Li)" by a charging time "Ti" until the charging level thereof reaches a next charging level. In the second embodiment, since the charging levels {L1, L2, L3} of the electrically-driven vehicles 30 {A1, A2, A3} are {2, 1, 0} at the time instant of 13:00, the weights {a1, a2, a3} become {3, 2, 1}. As a consequence, the priority degrees {R1, R2, R3} of the electrically-driven vehicles 30 {A1, A2, A3} at the time instant of 13:00 become {3 X 1 = 3, 2 X 4 = 8, 1 X 2 = 2}. In the second embodiment, a definition is made that the smaller the value of the priority degree becomes, the higher the priority degree becomes. As a consequence, the electrically-driven vehicles 30 are rearranged in this order of A3, A1, and A2.

As to the electrically-driven vehicles 30 (Ai: i = 1 to n) which are being coupled to the chargers 29, the charging start/stop judging unit 112 executes processes defined from the subsequent S2110b up to S2170b in order to charge such an electrically-driven vehicle 30 which quickly reaches the above-described next charging level within a short time with a top priority among the electrically-driven vehicles 30 coupled to the chargers 29 (S2110b). In the second embodiment, since the electrically-driven vehicles 30 are three vehicles, the processes defined from S2110b up to S2170b are carried out three times.

As to the electrically-driven vehicles 30 (Ai), the charging start/stop judging unit 112 acquires prediction values "Pi" of electric power consumption amounts which are required to charge the electrically-driven vehicles 30 (Ai) at this time instant by referring to the battery remaining capacities 1212 of the charging condition information 121 of the storage apparatus 120 and the curve of the electric power consumption amounts shown in Fig. 8 (S2120b). In the second embodiment, since the battery remaining capacities {B1, B2, B3} of the electrically-driven vehicles 30 {A1, A2, A3} are {95%, 40% 20%}, the electric power consumption amounts {P1, P2, P3} at this time instant are {1P, 3P, 3P}. Also, when a use reservation of the electrically-driven vehicle 30 is considered, in case that reservation information is "allowable" and a charging level is lower than a determined value, the relevant reservation information is changed to "not allowable."

The charging start/stop judging unit 112 acquires a total value "P" of the electric power consumption amounts of the electrically-driven vehicles 30 which have been so far added to each other, and the supplyable electric power amount "W" of the facility 20 by referring to the supplyable electric power amount information 122 of the storage apparatus 120 (S2130b). It is assumed that an initial value of the total value "P" of the electric power consumption amounts of the electrically-driven vehicles 30 is 0P. In the second embodiment, since the electrically-driven vehicles 30 have been rearranged in this order of A3, A1, and A2, the total value "P" of the electric power consumption amounts is calculated from the result of S2120b by being added in this order of 0P, 3P (= 0P + 3P), and 4P (= 3P + 1P). The supplyable electric power amount "W" is 6P.

In case where charging of the electrically-driven vehicle 30 (Ai) is commenced, the charging start/stop judging unit 112 compares the supplyable electric power amount "W" of the facility 20 with a summation between the electric power consumption amount "Pi" of the electrically-driven vehicle 30 (Ai) calculated in S2120b and the total electric power consumption amount "P" of all the electrically-driven vehicles 30 calculated in S2130b in order to confirm whether or not this summation exceeds the supplyable electric power amount "W" of the facility 20 (S2150b). In case that the summation between the electric power consumption "Pi" of the electrically-driven vehicle 30 (Ai) and the total electric power consumption "P" is smaller than the supplyable electric power amount "W", the process is advanced to S2140b.

In case that the summation between the electric power consumption "Pi" of the electrically-driven vehicle 30 (Ai) and the total electric power consumption "P" exceeds the supplyable electric power amount "W", the process is advanced to S2170b. In the second embodiment, since the summation between the electric power consumption amount "Pi" and the total electric power consumption amount "P" is 3P (= 0P + 3P) and 4P(= 3P + 1P) in the first time and the second time respectively, and the supplyable electric power "W" is 6P, the process is commonly advanced to S2140b. In the third time, since the summation between the electric power consumption amount "Pi" and the total electric power consumption amount "P" is 7P (= 4P + 3P) and the supplyable electric power amount "W" is 6P, the process is advanced to S2170b.

In case that a summation between the electric power consumption amount "Pi" of the electrically-driven vehicle 30 (Ai) and the total electric power consumption amount "P" exceeds the supplyable electric power amount "W", and furthermore, a difference between the supplyable electric power amount "W" and the summation of both the electric power consumption amount "Pi" and the total electric power consumption amount "P" is smaller than, or equal to the supply of electric power 1295 from the electrically-driven vehicle 30 set in S1000b, the charging start/stop judging unit 112 calculates discharge priority degrees of electrically-driven vehicles 30 (Ai: i = 1 to n) which are being coupled to the chargers 29 by multiplying the values acquired in S2040b by the weights of the charging level 1292 with reference to the charging level 1292 of the setting information 129 of the storage apparatus 120, and extracts such an electrically-driven vehicle 30 having the highest discharge priority degree, and then, instructs discharging thereof. It should be understood that in case where charging for the extracted electrically-driven vehicle 30 has been reserved, the discharging instruction is not issued, but the next electrically-driven vehicle 30 is selected. In this case, it is assumed that a discharge priority degree "Si" of an electrically-driven vehicle "Ai" is calculated based upon a product made by multiplying the weight "a (Li)" and a discharge time "Ui" until the electrically-driven vehicle "Ai" is discharged to the immediately-before-acquired charging level. In the second embodiment, the weights {a1, a2, a3} of the electrically-driven vehicles 30 {A1, A2, A3} at the time instant of 13:00 are {3, 2, 1}, and the discharging times {U1, U2, U3} until the electrically-driven vehicles 30 {A1, A2, A3} are discharged to the immediately-before-acquired charging level are {3, 4, 2}. As a consequence, the discharge priority degrees {S1, S2, S3} of the electrically-driven vehicles 30 {A1, A2, A3} at the time instant of 13:00 are {3 X 3 = 9, 2 X 4 = 8, 1 X 2 = 2}. In the second embodiment, a definition is made that the larger the value of the discharge priority degree becomes, the higher the priority degree becomes. As a consequence, such an electrically-driven vehicle 30 having the highest discharge priority degree is "A1." It should also be noted that in this case, since charging of the electrically-driven vehicle 30 "A1" has been reserved, the discharging instruction is not issued, but the next electrically-driven vehicle 30 is selected. In such a case that the summation between the electric power consumption amount "Pi" and the total electric power consumption amount "P" is smaller than the supplyable electric power amount "W" in S2150b, the charging start/stop judging unit 112 adds the electric power consumption amount "Pi" to the total electric power consumption amount "P", and reserves the charging start of the electrically-driven vehicle 30 (Ai) (S2140b). Concretely speaking, the charging condition 1211b of the electrically-driven vehicle 30 (Ai) is updated from "charging stop" to "under charging"; the electric power consumption amount 1213b is updated from "0P" to the above-explained prediction value "Pi" of the electric power consumption amount; and the charging time 1214b is updated to the prediction value "Ti" of the above-described charging time.

The charging start/stop judging unit 112 executes the processes defined from S211b to S2170b with respect to all the electrically-driven vehicles 30 (Ai: i = 1 ∼ n) (S2170b). In case of i < n, the process is returned to S2120b, and in case of i = n, the process is accomplished.

Next, a description is made of such a process that a process (charging start/stop judging unit 112) of the central processing unit (CPU) 110 mounted on the charging control apparatus 10 rearranges an order for effectively charging the vehicle-purpose batteries of the respective electrically-driven vehicles 30 by considering the vehicle reservation information 123.

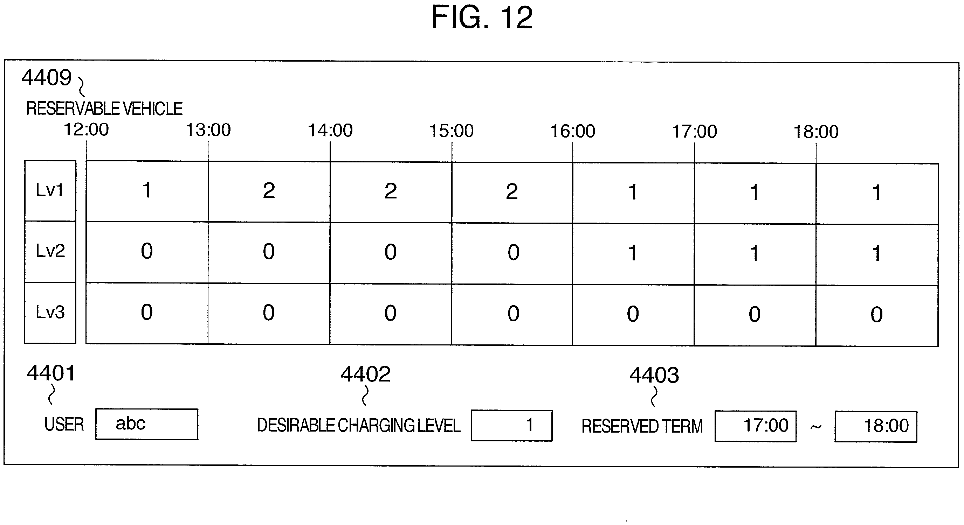

Fig. 12 is an example of a screen which is displayed on the user-purpose output apparatus 450 when a user of the electrically-driven vehicle 30 (namely, vehicle user) inputs reservation information. The screen to which the reservation information is inputted is configured by containing a reservation available vehicle 4409, a user 4401, a desirable charging level 4402, and a reservation term 4403, and is entered via the user-purpose input apparatus 440 to the vehicle reservation managing unit 115 of the charging control apparatus 10. The reservation available vehicle 4409 displays a total number of reservation available vehicles for each of charging levels and time ranges. The user 4401 accepts an input of an ID of the vehicle user. The desirable charging level 4402 accepts an input of a necessary minimum charging level which is desired by the vehicle user in response to a use of the vehicle user. The reservation term 4403 accepts an input of a desirable time range during which the vehicle user utilizes the electrically-driven vehicle 30.

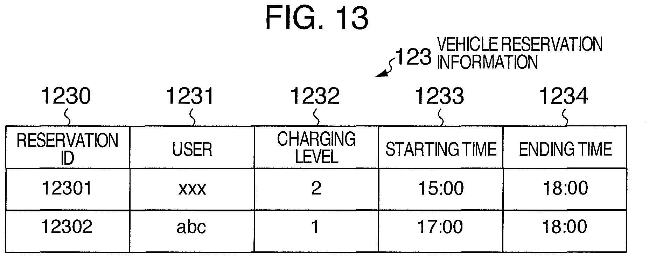

Fig. 13 is a diagram for representing an example of the vehicle reservation information 123 of the vehicle user. Items of the vehicle reservation information 123 includes a reservation ID 1230 for identifying vehicle reservation information, a user 1231 for identifying a vehicle user who has made a reservation, a charging level 1222 which is required as a necessary minimum charging level in order that the vehicle user who has made the reservation utilizes the electrically-driven vehicle 30, a starting time 1233 at which the reservation is started, and an ending time 1234 at which the reservation is ended. The information of these items is stored in the storage apparatus 120. The vehicle reservation managing unit 115 accepts the vehicle reservation information 123 of the vehicle user via the user-purpose input apparatus 440 of the user terminal apparatus 40 to store the above-described information into the storage apparatus 120.

The electric power situation monitoring unit 111 manages a vehicle reservation situation within the charging plan information 121 by considering the vehicle reservation information 123 in the process of S1400b. Concretely speaking, first of all, the electric power situation monitoring unit 111 acquires either vehicle-purpose battery remaining capacities or drivable distances of the respective electrically-driven vehicles 30 at the reservation starting time 1233 of the vehicle reservation information 123.

Next, the electric power situation monitoring unit 111 extracts such an electrically-driven vehicle 30 whose charging level is higher than, or equal to the charging level 1232 of the vehicle reservation information 123 and either the vehicle-purpose battery capacity or the drivable distance of which is the smallest value. Then, the electric power situation monitoring unit 111 changes a value of the reservation 1216b of the charging condition information 121 of the above-described electrically-driven vehicle 30 into the reservation ID 1230 of the vehicle reservation information 123, while the above-explained value corresponds to a charging time required in order to charge the vehicle-purpose battery up to the necessary minimum vehicle-purpose battery remaining capacity at the reservation starting time 1233 of the vehicle reservation information 123, and a term defined from the reservation starting time 1233 to the reservation ending time 1234.

If either another reservation ID 1230 or "not allowable" has already been present before the value of the reservation 1216b is changed into the reservation ID 1230, then the above-explained process is carried out with respect to charging condition information 121 of an electrically-driven vehicle 30, either the vehicle-purpose battery remaining capacity or the drivable distance of which is the second smallest value.

For example, in the second embodiment, in case that there is such a reservation that the reservation ID 1230 is "12302", and the charging level is "1 (60 Km)" from 17:00 to 18:00, it can be understood from the charging condition information 121 of Fig. 6A to Fig. 6C that the electrically-driven vehicles 30 {A2, A3} are applicable. When there is a plurality of applicable vehicles 30, in order to effectively charge available electrically-driven vehicles 30 with a top priority, the electric power situation monitoring unit 111 allocates such an electrically-driven vehicle 30 whose battery remaining capacity is small to the reservation with a top priority. In the second embodiment, since battery remaining capacities at the time instant of 17:00 are 60% in case of the electrically-driven vehicle 30 (A2) and 50% in case of the electrically-driven vehicle 30 (A3), the reservation 1216b of the electrically-driven vehicle 30 (A3) is changed into " 12302" of the reservation ID 1230. Also, in this case, since the drivable distance 1215b of the electrically-driven vehicle 30 (A3) must be 60 Km at the time instant of 17:00, the reservation 1216b is changed into "12302" of the reservation ID 1230 before 17:00 by a time required in charging until the drivable distance 1215b becomes from 0 to 60 Km. In the second embodiment, all the reservations 1216 of the electrically-driven vehicle 30 (A3) become "12302" of the reservation ID 1230 from 12:00 to 17:00.

If a charging level of the electrically-driven vehicle 30 reserved by the vehicle user has reached the charging level designated when the reservation is made, then the electric power situation monitoring unit 111 notifies the completion of the charging operation to the vehicle user via the user-purpose output apparatus 450. In the second embodiment, since the drivable distance 1215b reaches 60 Km at 15:00 in the electrically-driven vehicle 30 (A3) which is to be reserved, the electric power situation monitoring unit 111 transmits a notification of a completion of charging operation to the vehicle user at 15:00.

When it can be revealed that any one of electrically-driven vehicles 30 which satisfy the reservation condition (in this case, either drivable distance is 60 Km or charging level is 1 at designated time instant of 15:00) cannot be prepared due to some reason such as lowering of the supplyable electric power amount W of the facility 20, the electric power situation monitoring unit 111 transmits a warning to the operator and the vehicle user.

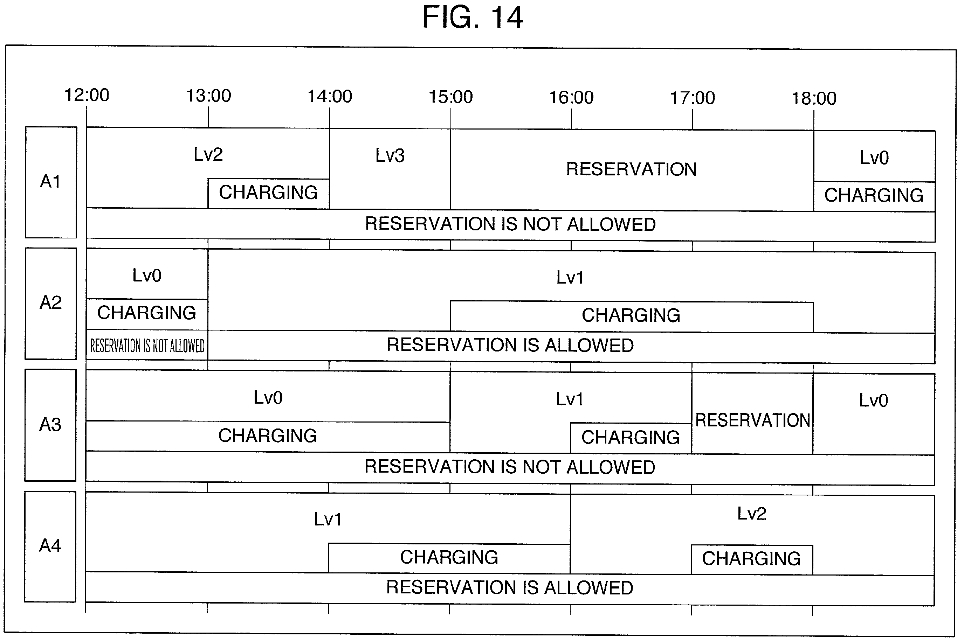

Fig. 14 is an example of a screen for displaying a charging plan formed by the electric power situation monitoring unit 111 which considers a reservation by referring to the charging condition information 121 of the storage apparatus 120. This screen displays charging start/stop times of the respective vehicle-purpose batteries, changes in battery conditions, reservation situations, and whether or not reservations are available. The electric power situation monitoring unit 111 outputs this screen content to the operator via the operator-purpose output apparatus 150. Also, the electric power situation monitoring apparatus 111 outputs this screen content to the vehicle user via the user-purpose output apparatus 450 of the user terminal apparatus 40.

In accordance with the previously described embodiments, electrically-driven vehicles whose charging levels are lower than such a charging level required to drive these electrically-driven vehicles over a necessary minimum drivable distance are charged with a priority, and such an electrically-driven vehicle whose charging level quickly reaches the above-explained charging level among these electrically-driven vehicles is charged with a top priority. As a result, any of the usable electrically-driven vehicles can be quickly prepared as many as possible, so that operability of the electrically-driven vehicles can be increased.

Also, an order for dynamically charging vehicle-purpose batteries can be rearranged by monitoring a change in charging environments, for instance, an electrically-driven vehicle is newly coupled to a charger in a half way; a commonly available electric power amount is increased by solar power generation etc.; and a supplyable electric power amount is lowered due to utilization of electricity by a subject other than electrically-driven vehicles.

Alternatively, in case where an electric power consumption amount for charging electrically-driven vehicles exceeds a supplyable electric power amount, before the charging is stopped, an increase of the supplyable electric power amount may be requested to a facility by employing a smart grid technique. Since the power increase is requested, a charging stop may be avoided, so that the charging may be continued.

The specification and drawings are, accordingly, to be regarded in an illustrative rather than a restrictive sense. It will, however, be evident that various modifications and changes may be made thereto without departing from the spirit and scope of the invention(s) as set forth in the claims.

## Claims

1. A charging control system for controlling charging of a plurality of vehicle-purpose batteries equipped in a plurality of electrically-driven vehicles (30), comprising:
one or more charging-purpose facilities (20); and
a charging control apparatus (10) for monitoring and controlling charging situations in the charging-purpose facilities (20), wherein:
the charging-purpose facility (20) is comprised of:
one, or more chargers (29) for charging the vehicle-purpose batteries provided in the electrically-driven vehicles (30);
a power receiving apparatus (22) for outputting electric power inputted from a power distribution network to the chargers (29); and
an electric power monitoring apparatus (21) for monitoring a supplyable electric power amount from the power receiving apparatus (22) to the chargers (29), and electric power consumption amounts in the chargers (29); and wherein:
the charging control apparatus (10) is comprised of:
an electric power situation monitoring unit (111) for acquiring condition information of each of the vehicle-purpose batteries from each of the electrically-driven vehicles (30), and for either acquiring or predicting the power electric consumption amounts in the chargers (29) from the electric power monitoring apparatus;
a charging start/stop judging unit (112) for calculating a charging time until the present charging level reaches a previously set charging level for each of the electrically-driven vehicles (30), for reserving a charging start instruction and/or a charging stop instruction of each of the electrically-driven vehicles (30) based upon the calculated charging time, the electric power consumption amount predicted by the electric power situation monitoring unit (111), and the supplyable electric power amount monitored by the electric power monitoring apparatus (21); and
a charging control instructing unit (114) for transmitting the reserved charging start instruction and/or the reserved charging stop instruction to the electrically-driven vehicle (30) which constitutes a subject vehicle.

2. The charging control system as claimed in claim 1 wherein:
the charging start/stop judging unit (112) executes a judging process of the electrically-driven vehicle (30), in which the charging start/stop judging unit (112) reserves the charging start instruction to the electrically-driven vehicle (30) whose vehicle-purpose battery is not under charging and whose remaining battery capacity is lower than the charging level, and stops charging in case that a predicted electric power consumption amount when charging to the electrically-driven vehicle (30) is started exceeds a supplyable electric power amount (W) to the charger (29) in the facility (20); and
the charging start/stop judging unit (114) determines issuing of the charging stop instruction of the vehicle-purpose battery of the electrically-driven vehicle (30) under charging, or canceling of the reservation of the electrically-driven vehicle (30), the charging start instruction of which has been reserved based upon the battery condition information and the supplyable electric power amount (W).

3. The charging control system as claimed in claim 2 wherein:
as to the electrically-driven vehicles (30) in which the vehicle-purpose batteries thereof are under charging, or charging of the vehicle-purpose batteries is being reserved, and furthermore, the remaining battery capacities thereof are higher than, or equal to the charging level, in case that the predicted electric power consumption amounts exceed the supplyable electric power (W) to the chargers (29) within the facility (20) in the order of longer charging times up to full charging, the charging start/stop judging unit (112) reserves the charging stop instruction as to the electrically-driven vehicles (30).

4. The charging control system as claimed in claim 1 wherein:
the charging start/stop judging unit (112) determines the electrically-driven vehicle (30) which should be charged in such a manner that the electrically-driven vehicle (30) whose charging time up to the charging level is short is charged with a top priority within a range where electric power amounts required to charge the vehicle-purpose batteries of the electrically-driven vehicles (30) do not exceed the supplyable electric power amount (W) to the facility (20).

5. The charging control system as claimed in claim 1 wherein:
since the charging start/stop judging unit (112) sets plural pieces of the charging levels, the charging start instruction and/or the charging stop instruction of each of the electrically-driven vehicles (30) is reserved in response to the plurality of charging levels.

6. The charging control system as claimed in claim 1 wherein:
when an electric power amount required to charge the electrically-driven vehicles (30) coupled to the chargers (29) exceeds the supplyable electric power amount (W) of the facility (20), the charging start/stop judging unit (112) requests the power distribution network to increase the supplyable electric power amount (W).

7. The charging control system as claimed in claim 1 wherein:
the charging control apparatus (10) is provided with charging condition information (121) which includes items as to a charger ID (1210), a charging condition (1211), a remaining capacity (1212) of the vehicle-purpose battery, an electric power consumption amount (1213), a charging time (1214), and a drivable distance (1215); and
the electric power situation monitoring unit (111) outputs the charging condition information (121) via an output apparatus (450) which can be confirmed by a user.

8. The charging control system as claimed in claim 1 wherein:
the charging control apparatus (10) is provided with setting information (129) which includes any one, or more items of an update interval (1291), a charging level (1292), a supply of electric power (1292) from a power distribution network, a supply of electric power (1293) from equipments within a facility, a supply of electric power (1294) from an electrically-driven vehicle, and a charging plan setting method (1296); and
the electric power situation monitoring unit (111) sets the setting information (129) which is inputted by a user via an input apparatus (440) to the charging control apparatus (10).

9. The charging control system as claimed in claim 1 wherein:
in case that an electrically-driven vehicle (30) which satisfies a reservation condition cannot be prepared, the electric power situation monitoring unit (111) notifies the situation to a user.

10. The charging control system as claimed in claim 1 wherein:
the charging start/stop judging unit (112) rearranges an order for charging the vehicles-purpose batteries of the respective electrically-driven vehicles (30) by considering vehicle reservation information (123) of a user.

11. The charging control system as claimed in claim 1 wherein:
the facility (20) is further comprised of:
a facility-purpose battery (23) which stores thereinto electric power as chemical energy and outputs the stored electric power to the chargers (29), and/or
a solar cell (24) which converts optical energy into electric power by utilizing an opto-electromotive effect and outputs the converted electric power to the chargers (29); and
the electric power monitoring apparatus (21) monitors supplyable electric power amounts (W) from the power receiving apparatus (22) and the facility-purpose battery (23), and/or the solar cell (24).

12. The charging control system as claimed in claim 1 wherein:
the charging control system is further comprised of:
a plurality of the facilities (20).
